# EUROPÄISCHE PATENTANMELDUNG

(11) **EP 3 002 314 A1**
(43) Veröffentlichungstag der Anmeldung: **06.04.2016**
(21) Anmeldenummer: 14187372.9
(22) Anmeldetag: 01.10.2014
(51) Int. Cl.: C08L 63/00, C08L 71/02, C08L 83/04

(54) **Zweikomponentige Zusammensetzung**

(71) Anmelder: Sika Technology AG, 6340 Baar (CH)
(72) Erfinder: Burckhardt, Urs, 8049 Zürich (CH); Kelch, Steffen, 8102 Oberengstringen (CH); Stadelmann, Ursula, 8046 Zürich (CH)
(74) Vertreter: Sika Patent Attorneys

(57) **Zusammenfassung**

Die vorliegende Erfindung betrifft eine zweikomponentige Zusammensetzung enthaltend mindestens ein bei Raumtemperatur flüssiges Silangruppen-haltiges Polymer, mindestens ein Epoxid-Flüssigharz, mindestens ein Polyetheramin und mindestens ein Amino- oder Mercaptosilan.

Die Zusammensetzung ist geruchsarm, härtet bei Raumtemperatur schnell und ohne Blasenbildung aus und bildet dabei ein zähelastisches Material von hoher Festigkeit, hoher Haftkraft und guter thermischer Beständigkeit, das weder zu Vergilbung noch zu Substratverfärbung neigt. Die Zusammensetzung eignet sich ausgezeichnet als zähelastischer Klebstoff für strukturelle Verklebungen im Baubereich und in der industriellen Fertigung.

## Beschreibung

### Technisches Gebiet

Die Erfindung betrifft bei Raumtemperatur härtbare zweikomponentige Zusammensetzungen auf Basis einer Kombination aus Silangruppen-haltigem Polymer und Epoxidharz, sowie deren Verwendung, insbesondere als zähelastischer Klebstoff.

### Stand der Technik

Als Klebstoffe für strukturelle Verklebungen sind zweikomponentige Polyurethan-Systeme bekannt. Sie härten schnell aus und bilden ein zähelastisches Material von hoher Festigkeit, enthalten aber teilweise gesundheitsschädliche Isocyanate und können beim Aushärten Blasen bilden.

Ebenfalls bekannt sind zweikomponentige Epoxidharz-Klebstoffe. Diese erreichen sehr hohe Festigkeiten, sind aber nicht zähelastisch, sondern spröde und kaum dehnbar und somit für viele Anwendungen im strukturellen Kleben nicht geeignet.

Weiterhin bekannt sind härtbare Massen auf Basis von silanfunktionellen Polymeren. Diese werden meist einkomponentig formuliert und vernetzen bei Raumtemperatur durch Reaktion mit Luftfeuchtigkeit. Sie zeichnen sich durch eine blasenfreie Aushärtung sowie durch hohe Haftkräfte aus, härten aber relativ langsam aus und sind bezüglich maximal erreichbarer Festigkeit sehr limitiert. Oft weisen sie auch eine geringe Weiterreissfestigkeit auf, sind also recht spröde. Ausserdem sind sie thermisch relativ unbeständig. Sie sind deshalb als zähelastischer Klebstoff wenig geeignet.

Bekannt sind auch härtbare Massen auf Basis einer Kombination von silanfunktionellen Polymeren mit Epoxidharzen, beispielsweise aus EP 0 186 191 und EP 0 370 464. Solche Massen sind zweikomponentig und erreichen eine höhere Festigkeit und Zähigkeit als jene auf Basis von silanfunktionellen Polymeren alleine, sind diesbezüglich aber noch verbesserungsfähig. Die bekannten Systeme enthalten zudem meist eine Mannich-Base wie insbesondere 2,4,6-Tris(dimethylaminomethyl)phenol, welche die Reaktion von Epoxygruppen beschleunigt. Die Mannich-Base verleiht den Massen aber einen ausgeprägten, unangenehmen Amingeruch und führt dazu, dass die Massen mit der Zeit vergilben. Weil die Mannich-Base bei der Aushärtung nicht ins Polymer eingebunden wird, können ausserdem unerwünschte Migrationseffekte und Substratverfärbungen auftreten.

### Darstellung der Erfindung

Aufgabe der vorliegenden Erfindung ist es, eine härtbare Masse bereitzustellen, die geruchsarm ist, bei Raumtemperatur schnell und ohne Blasenbildung aushärtet und dabei ein zähelastisches Material von hoher Festigkeit, hoher Haftkraft und guter thermischer Beständigkeit bildet, das weder zur Vergilbung noch zu Substratverfärbung oder Migrationseffekten neigt. Überraschenderweise wird diese Aufgabe durch eine Zusammensetzung wie in Anspruch 1 beschrieben gelöst. Die Zusammensetzung zeichnet sich durch einen geringen Geruch aus, ist lange lagerfähig und bei Raumtemperatur gut verarbeitbar. Sie härtet auch ohne Erwärmung rasch und ohne Blasenbildung aus und ergibt ein zähelastisches Material von überraschend hoher Festigkeit, das thermisch sehr stabil ist. Überraschend ist insbesondere die Tatsache, dass die Zusammensetzung trotz ihrer sehr hohen Festigkeit eine gute Dehnbarkeit aufweist. Weiterhin überraschend erreicht die Zusammensetzung bei der Aushärtung bei Raumtemperatur nahezu die mechanischen Endwerte, welche nach einer zusätzlichen Erwärmung auf 80 °C erhalten werden. Sehr vorteilhaft ist auch die geringe Wärmeentwicklung der frisch vermischten Zusammensetzung, im Gegensatz zu reinen Epoxidharz-Systemen, welche sich nach dem Vermischen der Komponenten sehr stark aufheizen können. Mit diesen Eigenschaften eignet sich die Zusammensetzung ausgezeichnet als zähelastischer Klebstoff für strukturelle Verklebungen im Baubereich und in der industriellen Fertigung. Überraschenderweise ermöglicht das Polyetheramin deutlich höhere Festigkeiten als andere im Stand der Technik übliche Amine wie beispielsweise Trimethylhexamethylendiamin oder Isophorondiamin oder Diethylentriamin oder Amin-Epoxid-Addukte.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Zusammensetzung umfassend eine erste und eine zweiten Komponente, enthaltend
- mindestens ein bei Raumtemperatur flüssiges Silangruppen-haltiges Polymer,
- mindestens ein Epoxid-Flüssigharz,
- mindestens ein Polyetheramin und
- mindestens ein Amino- oder Mercaptosilan,
wobei das Polyetheramin und das Amino- oder Mercaptosilan nicht in der gleichen Komponente wie das Epoxid-Flüssigharz vorliegen.

Im vorliegenden Dokument bezeichnet der Begriff "Alkoxysilangruppe" oder kurz "Silangruppe" eine an einen organischen Rest gebundene Silylgruppe mit einem bis drei, insbesondere zwei oder drei, hydrolysierbaren Alkoxy-Resten am Silicium-Atom.

Entsprechend bezeichnet der Begriff "Alkoxysilan" oder kurz "Silan" eine organische Verbindung, welche mindestens eine Silangruppe aufweist.

Als "Aminosilan", "Mercaptosilan", "Hydroxysilan" bzw. "Isocyanatosilan" werden Organosilane bezeichnet, die am organischen Rest zusätzlich zur Silangruppe eine oder mehrere Amino-, Mercapto-, Hydroxyl- bzw. Isocyanatgruppen aufweisen.

Der Begriff "Silangruppen-haltiger Polyether" umfasst auch Silangruppen-haltige Polymere, welche zusätzlich zu Polyether-Einheiten auch Urethangruppen, Harnstoffgruppen oder Thiourethangruppen enthalten können. Solche Silangruppen-haltige Polyether werden auch als "Silangruppen-haltige Polyurethane" bezeichnet.

Mit "Poly" beginnende Substanznamen wie Polyol oder Polyisocyanat bezeichnen Substanzen, die formal zwei oder mehr der in ihrem Namen vorkommenden funktionellen Gruppen pro Molekül enthalten.

Als "primäre Aminogruppe" wird eine NH₂-Gruppe bezeichnet, die an einen organischen Rest gebunden ist, und als "sekundäre Aminogruppe" wird eine NH-Gruppe bezeichnet, die an zwei organische Reste, welche auch gemeinsam Teil eines Rings sein können, gebunden ist.

Als "Aminwasserstoff" werden die Wasserstoffatome von primären und sekundären Aminogruppen bezeichnet.

Unter "Molekulargewicht" versteht man im vorliegenden Dokument die molare Masse (in Gramm pro Mol) eines Moleküls oder eines Teils eines Moleküls, auch als "Rest" bezeichnet. Als "mittleres Molekulargewicht" wird das Zahlenmittel Mₙ einer oligomeren oder polymeren Mischung von Molekülen oder Resten bezeichnet, welches üblicherweise mittels Gelpermeationschromatographie (GPC) gegen Polystyrol als Standard bestimmt wird.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Eine gestrichelte Linie in den Formeln in diesem Dokument stellt jeweils die Bindung zwischen einem Substituenten und dem zugehörigen Molekülrest dar. Als "Raumtemperatur" wird eine Temperatur von 23 °C bezeichnet.

Der Begriff "hohe Festigkeit" bezieht sich auf ein hohes Elastizitätsmodul und gegebenenfalls auch eine hohe Zugfestigkeit.

Mit dem Begriff "zähelastisch" werden Materialien beschrieben, welche eine Kombination aus hoher Festigkeit, guter Dehnbarkeit und hoher Schlagzähigkeit aufweisen.

Die zweikomponentige Zusammensetzung enthält mindestens ein bei Raumtemperatur flüssiges Silangruppen-haltiges Polymer.

Dieses ist bevorzugt ein Silangruppen-haltiges organisches Polymer, insbesondere ein Polyolefin, Poly(meth)acrylat oder Polyether oder eine Mischform dieser Polymere, welches jeweils eine oder bevorzugt mehrere Silangruppen trägt. Die Silangruppen können seitlich in der Kette oder endständig sein.

Insbesondere ist das Silangruppen-haltige Polymer ein Silangruppen-haltiger Polyether. Dieser weist bevorzugt mehrheitlich Oxyalkylen-Einheiten, insbesondere 1,2-Oxypropylen-Einheiten, auf.

Das Silangruppen-haltige Polymer weist im Mittel bevorzugt 1.3 bis 4, insbesondere 1.5 bis 3, besonders bevorzugt 1.7 bis 2.8, Silangruppen pro Molekül auf. Die Silangruppen sind bevorzugt endständig.

Bevorzugte Silangruppen sind Trimethoxysilangruppen, Dimethoxymethylsilangruppen oder Triethoxysilangruppen.

Das Silangruppen-haltige Polymer weist bevorzugt ein mittleres Molekulargewicht, bestimmt mittels GPC gegenüber Polystyrol-Standard, im Bereich von 1'000 bis 30'000 g/mol, insbesondere von 2'000 bis 20'000 g/mol, auf.

Das Silangruppen-haltige Polymer enthält bevorzugt Endgruppen der Formel (II), 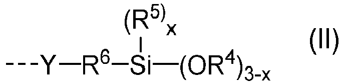 wobei
x für einen Wert von 0 oder 1 oder 2, bevorzugt für 0 oder 1, insbesondere für 0, steht,
R⁴ für einen linearen oder verzweigten, einwertigen Kohlenwasserstoffrest mit 1 bis 5 C-Atomen steht,
R⁵ für einen linearen oder verzweigten, einwertigen Kohlenwasserstoffrest mit 1 bis 8 C-Atomen, insbesondere für Methyl oder für Ethyl, steht,
R⁶ für einen linearen oder verzweigten, zweiwertigen Kohlenwasserstoffrest mit 1 bis 12 C-Atomen, welcher gegebenenfalls cyclische und/oder aromatische Anteile und gegebenenfalls ein oder mehrere Heteroatome, insbesondere ein oder mehrere Stickstoffatome, aufweist, steht,
Y für einen zweiwertigen Rest ausgewählt aus -O-, -S-, -N(R⁷)-, -N(R⁷)-CO-, -O-CO-N(R⁷)-, -N(R⁷)-CO-O- und -N(R⁷)-CO-N(R⁷)- steht,
   wobei R⁷ für ein Wasserstoffatom oder für einen linearen oder verzweigten Kohlenwasserstoff-Rest mit 1 bis 20 C-Atomen, welcher gegebenenfalls cyclische Anteile aufweist, und welcher gegebenenfalls eine Alkoxysilyl-, Ether- oder Carbonsäureestergruppe aufweist, steht.

Bevorzugt steht R⁴ für Methyl oder für Ethyl oder für Isopropyl.

Besonders bevorzugt steht R⁴ für Methyl. Solche Silangruppen-haltige Polymere sind besonders reaktiv.

Weiterhin besonders bevorzugt steht R⁴ für Ethyl. Solche Silangruppen-haltige Polymere sind besonders lagerstabil und toxikologisch vorteilhaft.

Bevorzugt steht R⁵ für Methyl.

Bevorzugt steht R⁶ für 1,3-Propylen oder für 1,4-Butylen, wobei Butylen mit einer oder zwei Methylgruppen substituiert sein kann.

Besonders bevorzugt steht R⁶ für 1,3-Propylen.

Verfahren zur Herstellung von Silangruppen-haltigen Polyethern sind dem Fachmann bekannt.

In einem Verfahren sind Silangruppen-haltige Polyether erhältlich aus der Umsetzung von Allylgruppen-haltigen Polyethern mit Hydrosilanen, gegebenenfalls unter Kettenverlängerung mit beispielsweise Diisocyanaten.

In einem weiteren Verfahren sind Silangruppen-haltige Polyether erhältlich aus der Copolymerisation von Alkylenoxiden und Epoxysilanen, gegebenenfalls unter Kettenverlängerung mit beispielsweise Diisocyanaten.

In einem weiteren Verfahren sind Silangruppen-haltige Polyether erhältlich aus der Umsetzung von Polyetherpolyolen mit Isocyanatosilanen, gegebenenfalls unter Kettenverlängerung mit Diisocyanaten.

In einem weiteren Verfahren sind Silangruppen-haltige Polyether erhältlich aus der Umsetzung von Isocyanatgruppen-haltigen Polyethern, insbesondere NCO-terminierten Urethan-Polyethern aus der Umsetzung von Polyetherpolyolen mit einer überstöchiometischen Menge an Polyisocyanaten, mit Aminosilanen, Hydroxysilanen oder Mercaptosilanen. Silangruppen-haltige Polyether aus diesem Verfahren sind besonders bevorzugt. Dieses Verfahren ermöglicht den Einsatz einer Vielzahl von kommerziell gut verfügbaren, kostengünstigen Ausgangsmaterialien, womit unterschiedliche Polymereigenschaften erhalten werden können, beispielsweise eine hohe Dehnbarkeit, eine hohe Festigkeit, eine tiefe Glasübergangstemperatur oder eine hohe Hydrolysebeständigkeit.

Bevorzugte Silangruppen-haltige Polyether sind erhältlich aus der Umsetzung von NCO-terminierten Urethan-Polyethern mit Aminosilanen oder Hydroxysilanen. Dafür geeignete NCO-terminierte Urethan-Polyether sind erhältlich aus der Umsetzung von Polyetherpolyolen, insbesondere Polyoxyalkylendiolen oder Polyoxyalkylentriolen, bevorzugt Polyoxypropylendiolen oder Polyoxypropylentriolen, mit einer überstöchiometrischen Menge an Polyisocyanaten, insbesondere Diisocyanaten.

Bevorzugt wird die Umsetzung zwischen dem Polyisocyanat und dem Polyetherpolyol unter Feuchtigkeitsausschluss bei einer Temperatur von 50 °C bis 160 °C durchgeführt, gegebenenfalls in Anwesenheit geeigneter Katalysatoren, wobei das Polyisocyanat so dosiert ist, dass dessen Isocyanatgruppen im Verhältnis zu den Hydroxylgruppen des Polyols im stöchiometrischen Überschuss vorhanden sind. Insbesondere wird der Überschuss an Polyisocyanat so gewählt, dass im resultierenden Urethan-Polyether nach der Umsetzung aller Hydroxylgruppen ein Gehalt an freien Isocyanatgruppen von 0.1 bis 5 Gewichts-%, bevorzugt 0.2 bis 4 Gewichts-%, besonders bevorzugt 0.3 bis 3 Gewichts-%, bezogen auf das gesamte Polymer, verbleibt.

Bevorzugte Diisocyanate sind ausgewählt aus der Gruppe bestehend aus 1,6-Hexamethylendiisocyanat (HDI), 1-Isocyanato-3,3,5-trimethyl-5-isocyanatomethyl-cyclohexan (=Isophorondiisocyanat oder IPDI), 2,4- und 2,6-Toluylendiisocyanat und beliebige Gemische dieser Isomeren (TDI) und 4,4'-, 2,4'- und 2,2'-Diphenylmethandiisocyanat und beliebige Gemische dieser Isomeren (MDI). Besonders bevorzugt sind IPDI oder TDI. Meist bevorzugt ist IPDI. Damit werden Silangruppen-haltige Polyether mit besonders guter Lichtechtheit erhalten.

Speziell geeignet als Polyetherpolyole sind Polyoxyalkylendiole oder Polyoxyalkylentriole mit einem Ungesättigtheitsgrad tiefer als 0.02 mEq/g, insbesondere tiefer als 0.01 mEq/g, und einem mittleren Molekulargewicht im Bereich von 400 bis 25'000 g/mol, insbesondere 1000 bis 20'000 g/mol.

Neben Polyetherpolyolen können anteilig auch andere Polyole eingesetzt werden, insbesondere Polyacrylatpolyole, sowie niedrigmolekulare Diole oder Triole.

Geeignete Aminosilane für die Umsetzung mit einem NCO-terminierten Urethan-Polyether sind primäre und sekundäre Aminosilane. Bevorzugt sind 3-Aminopropyltrimethoxysilan, 3-Aminopropyldimethoxymethylsilan, 4-Aminobutyl-trimethoxysilan, 4-Amino-3-methylbutyl-trimethoxysilan, 4-Amino-3,3-dimethylbutyl-trimethoxysilan, N-Butyl-3-aminopropyltrimethoxysilan, N-Phenyl-3-aminopropyltrimethoxysilan, Addukte aus primären Aminosilanen wie 3-Aminopropyltrimethoxysilan, 3-Aminopropyldimethoxymethylsilan oder N-(2-Aminoethyl)-3-aminopropyltrimethoxysilan und Michael-Akzeptoren wie Acrylnitril, (Meth)acrylsäureestern, (Meth)acrylsäureamiden, Maleinsäure- oder Fumarsäurediestern, Citraconsäurediestern oder Itaconsäurediestern, insbesondere N-(3-Trimethoxysilylpropyl)amino-bernsteinsäuredimethyl- oder -diethylester. Ebenfalls geeignet sind Analoga der genannten Aminosilane mit Ethoxy- oder Isopropoxygruppen anstelle der Methoxygruppen am Silicium.

Geeignete Hydroxysilane für die Umsetzung mit einem NCO-terminierten Urethan-Polyether sind insbesondere erhältlich aus der Addition von Aminosilanen an Lactone oder an cyclische Carbonate oder an Lactide.

Bevorzugte Hydroxysilane dieser Art sind N-(3-Triethoxysilylpropyl)-2-hydroxypropanamid, N-(3-Trimethoxysilylpropyl)-2-hydroxypropanamid, N-(3-Triethoxysilylpropyl)-4-hydroxypentanamid, N-(3-Triethoxysilylpropyl)-4-hydroxyoctanamid, N-(3-Triethoxysilylpropyl)-5-hydroxydecanamid oder N-(3-Triethoxysilylpropyl)-2-hydroxypropylcarbamat.

Weitere geeignete Hydroxysilane sind erhältlich aus der Addition von Aminosilanen an Epoxide oder aus der Addition von Aminen an Epoxysilane. Bevorzugte Hydroxysilane dieser Art sind 2-Morpholino-4(5)-(2-trimethoxysilylethyl)cyclohexan-1-ol, 2-Morpholino-4(5)-(2-triethoxysilylethyl)cyclohexan-1-ol oder 1-Morpholino-3-(3-(triethoxysilyl)propoxy)propan-2-ol.

Als Silangruppen-haltige Polyether sind auch kommerziell erhältliche Produkte geeignet, insbesondere die Folgenden: MS Polymer™ (von Kaneka Corp.; insbesondere die Typen S203H, S303H, S227, S810, MA903 und S943); MS Polymer™ bzw. Silyl™ (von Kaneka Corp.; insbesondere die Typen SAT010, SAT030, SAT200, SAX350, SAX400, SAX725, MAX450, MAX951); Excestar^{®} (von Asahi Glass Co. Ltd.; insbesondere die Typen S2410, S2420, S3430, S3630); SPUR+* (von Momentive Performance Materials; insbesondere die Typen 1010LM, 1015LM, 1050MM); Vorasil™ (von Dow Chemical Co.; insbesondere die Typen 602 und 604); Desmoseal^{®} (von Bayer MaterialScience AG; insbesondere die Typen S XP 2458, S XP 2636, S XP 2749, S XP 2774 und S XP 2821), TEGOPAC^{®} (von Evonik Industries AG; insbesondere die Typen Seal 100, Bond 150, Bond 250), Polymer ST (von Hanse Chemie AG/Evonik Industries AG, insbesondere die Typen 47, 48, 61, 61 LV, 77, 80, 81); Geniosil^{®} STP (von Wacker Chemie AG; insbesondere die Typen E10, E15, E30, E35).

Bevorzugt weist die Zusammensetzung einen Gehalt an Silangruppen-haltigem Polymer im Bereich von 5 bis 60 Gewichts-%, besonders bevorzugt im Bereich von 10 bis 50 Gewichts-%, insbesondere im Bereich von 15 bis 40 Gewichts-%, auf.

Eine solche Zusammensetzung weist eine hohe Festigkeit bei guter Dehnbarkeit und zähelastische Eigenschaften auf.

Die zweikomponentige Zusammensetzung umfasst weiterhin mindestens ein Epoxid-Flüssigharz.

Als Epoxid-Flüssigharz geeignet sind übliche technische Epoxidharze, die bei Raumtemperatur fliessfähig sind und eine Glasübergangstemperatur unterhalb von 25 °C aufweisen. Diese werden auf bekannte Art und Weise erhalten, insbesondere aus der Glycidylisierung von Verbindungen mit mindestens zwei aktiven Wasserstoffatomen, insbesondere Polyphenolen, Polyolen oder Aminen, durch Umsetzung mit Epichlorhydrin.

Als Epoxid-Flüssigharz geeignet sind aliphatische oder cycloaliphatische Epoxidharze, insbesondere
- Glycidylether von gesättigten oder ungesättigten, verzweigten oder unverzweigten, zyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- Glycidylether von hydriertem Bisphenol-A, -F oder -A/F oder kernhydrierte Bisphenol-A-, -F- oder -A/F-Flüssigharze;
- N-Glycidylderivate von Hydantoinen, Amiden oder heterocyclischen Stickstoffbasen, wie insbesondere Triglycidylcyanurat oder Triglycidylisocyanurat.

Als Epoxid-Flüssigharz bevorzugt sind aromatische Epoxidharze, insbesondere
- Glycidylether von Polyphenolen, insbesondere von Resorcinol, Hydrochinon, Brenzkatechin, 2,2-Bis(4-hydroxyphenyl)propan (Bisphenol-A), Bis(hydroxyphenyl)methan (Bisphenol-F), Bisphenol-A/F, Bis(4-hydroxy-3-methylphenyl)methan, 2,2-Bis(4-hydroxy-3-methylyphenyl)propan (Bisphenol-C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)-cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Glycidylether von Kondensationsprodukten von Phenolen mit Aldehyden, die unter sauren Bedingungen erhalten werden, insbesondere Glycidylether von Phenol-Formaldehyd-Novolaken oder Kresol-Formaldehyd-Novolaken;
- Glycidylisierungsprodukte von aromatischen Aminen, insbesondere von Anilin, Toluidin, 4-Aminophenol, 4,4'-Methylendiphenyldiamin, 4,4'-Methylendiphenyldi(N-methyl)amin, 4,4'-[1,4-Phenylen-bis(1-methylethyliden)]-bisanilin (Bisanilin-P) oder 4,4'-[1,3-Phenylen-bis(1-methylethyliden)]bisanilin (Bisanilin-M).

Als Epoxid-Flüssigharz besonders bevorzugt sind Diglycidylether von Bisphenol-A oder Bisphenol-F oder Bisphenol-A/F, wie sie kommerziell beispielsweise von Dow, Huntsman oder Momentive erhältlich sind. Diese Epoxid-Flüssigharze weisen eine gut handhabbare Viskosität auf und ermöglichen hohe Festigkeiten und Beständigkeiten.

Bevorzugt weist die Zusammensetzung einen Gehalt an Epoxid-Flüssigharz im Bereich von 30 bis 70 Gewichts-%, besonders bevorzugt im Bereich von 35 bis 65 Gewichts-%, auf.

Eine solche Zusammensetzung weist eine hohe Festigkeit bei guter Dehnbarkeit und zähelastische Eigenschaften auf. Besonders überraschend ist dabei der Umstand, dass solche Materialien auch bei sehr hohen Festigkeiten noch eine gute Dehnbarkeit zeigen.

Die zweikomponentige Zusammensetzung umfasst weiterhin mindestens ein Polyetheramin.

Geeignete Polyetheramine sind Polyoxyalkylene oder polyoxyalkylierte Verbindungen mit endständigen Aminogruppen, wie sie kommerziell beispielsweise unter den Handelsnamen Jeffamine^{®} (von Huntsman), Polyetheramine (von BASF) oder PC Amine^{®} (von Nitroil) erhältlich sind, insbesondere die Folgenden:
- Polyetherdiamine mit 2-Aminopropyl- oder 2-Aminobutyl-Endgruppen, insbesondere Jeffamine^{®} D-230, Jeffamine^{®} D-400 oder Jeffamine^{®} D-2000, Jeffamine^{®} D-4000, Jeffamine^{®} XTJ-582, Jeffamine^{®} XTJ-578, Jeffamine^{®} HK-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} THF-100, Jeffamine^{®} THF-140, Jeffamine^{®} THF-230, Jeffamine^{®} XTJ-533 oder Jeffamine^{®} XTJ-536 (alle von Huntsman).
- Polyetherdiamine mit 4-Aminobutyl-Endgruppen aus der Aminierung von Poly(tetramethylenether)glykolen, insbesondere Jeffamine^{®} THF-170 (von Huntsman).
- Polyetherdiamine aus der Polyalkoxylierung von Diolen, insbesondere propoxyliertes 1,4-Dimethylolcyclohexan wie Jeffamine^{®} RFD-270 (von Huntsman).
- Polyethertriamine, insbesondere Jeffamine^{®} T-403, Jeffamine^{®} T-3000, Jeffamine^{®} T-5000 oder Jeffamine^{®} XTJ-566 (alle von Huntsman).
- Polyetheramine mit sekundären Aminogruppen, insbesondere Jeffamine^{®} SD-231, Jeffamine^{®} SD-401, Jeffamine^{®} SD-2001 oder Jeffamine^{®} ST-404 (alle von Huntsman).
- Aminopropylierte Polyetheramine, wie sie durch Umsetzen von Polyetheraminen mit Acrylnitril und nachfolgender Hydrierung erhältlich sind.

Bevorzugt weist das Polyetheramin ein mittleres Molekulargewicht im Bereich von 200 bis 500 g/mol auf.

Besonders bevorzugte Polyetheramine sind Polyetherdi- oder -triamine mit primären Aminogruppen und einem mittleren Molekulargewicht im Bereich von 200 bis 500 g/mol, insbesondere Jeffamine^{®} D-230, Jeffamine^{®} D-400 Jeffamine^{®} XTJ-582, Jeffamine^{®} HK-511, Jeffamine^{®} XTJ-568, Jeffamine^{®} T-403 oder Jeffamine^{®} XTJ-566 (alle von Huntsman), oder entsprechende Typen von BASF oder von Nitroil.

Am meisten bevorzugt sind Jeffamine^{®} D-230 oder Jeffamine^{®} D-400 oder Jeffamine^{®} T-403 (alle von Huntsman), oder entsprechende Typen von BASF oder von Nitroil.

Mit den bevorzugten Polyetheraminen werden besonders hohe Festigkeiten erhalten.

Bevorzugt weist die Zusammensetzung einen Gehalt an Polyetheramin im Bereich von 5 bis 30 Gewichts-%, besonders bevorzugt im Bereich von 10 bis 30 Gewichts-%, auf.

Eine solche Zusammensetzung weist eine hohe Festigkeit bei guter Dehnbarkeit und zähelastische Eigenschaften auf.

Die zweikomponentige Zusammensetzung umfasst weiterhin mindestens ein Amino- oder Mercaptosilan.

Das Amino- oder Mercaptosilan ist insbesondere ein Alkoxysilan, welches auch in hydrolysierter oder teilhydrolysierter und/oder in oligomerer Form vorliegen kann, also kondensierte Anteile enthalten kann.

Als Amino- oder Mercaptosilan eignet sich in einer Ausführungsform ein sekundäres Aminosilan, insbesondere N-Butyl-3-aminopropyltrimethoxysilan, N-Phenyl-3-aminopropyltrimethoxysilan oder ein Addukt aus primären Aminosilanen wie 3-Aminopropyltrimethoxysilan, 3-Aminopropyldimethoxymethylsilan oder N-(2-Aminoethyl)-3-aminopropyltrimethoxysilan mit Michael-Akzeptoren wie Acrylnitril, (Meth)acrylsäureester, (Meth)acrylsäureamide, Maleinsäure- oder Fumarsäurediester, Citraconsäurediester oder Itaconsäurediester, insbesondere N-(3-Trimethoxysilylpropyl)amino-bernsteinsäuredimethyl- oder -diethyl-ester. Ebenfalls geeignet sind Analoga der genannten Aminosilane mit Ethoxygruppen anstelle der Methoxygruppen am Silicium.

Als Amino- oder Mercaptosilan bevorzugt ist ein Silan der Formel (I), 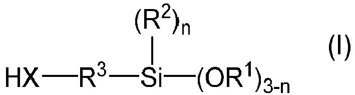 wobei
X für S oder NH steht,
R¹ für einen einwertigen linearen oder verzweigten Kohlenwasserstoff-Rest mit 1 bis 5 C-Atomen steht,
R² für einen einwertigen linearen oder verzweigten Kohlenwasserstoff-Rest mit 1 bis 8 C-Atomen steht,
R³ für einen zweiwertigen linearen oder verzweigten Kohlenwasserstoff-Rest mit 1 bis 12 C-Atomen, welcher gegebenenfalls cyclische und/oder aromatische Anteile und gegebenenfalls ein oder mehrere Heteroatome aufweist, steht, und
n für 0 oder 1 oder 2 steht.

Bevorzugt steht X für NH. Diese Silane ermöglichen besonders geruchsarme Zusammensetzungen.

Bevorzugt steht n für 0 oder 1, insbesondere für 0. Diese Silane sind besonders reaktiv.

Bevorzugt steht R¹ für Methyl oder für Ethyl oder für Isopropyl.

Besonders bevorzugt steht R¹ für Methyl. Diese Silane sind besonders reaktiv. Weiterhin besonders bevorzugt steht R¹ für Ethyl. Diese Silane spalten bei der Reaktion mit Wasser ökologisch und toxikologisch unbedenklicheres Ethanol ab.

Bevorzugt steht R² für Methyl.

Bevorzugt steht R³ für für einen zweiwertigen linearen oder verzweigten Kohlenwasserstoff-Rest mit 1 bis 6 C-Atomen, welcher gegebenenfalls ein Stickstoffatom aufweist.

Besonders bevorzugt steht R³ für einen Rest ausgewählt aus 1,3-Propylen, 2-Methyl-1,3-propylen, 1,4-Butylen, 2,2-Dimethyl-2,4-butylen und 3-Aza-1,6-hexylen. Diese Reste sind ausgehend von der Gruppe HX nummeriert.

Bevorzugt ist das Amino- oder Mercaptosilan ausgewählt aus der Gruppe bestehend aus 3-Aminopropyltrimethoxysilan, N-(2-Aminoethyl)-3-aminopropyltrimethoxysilan, 3-Amino-2-methylpropyltrimethoxysilan, 4-Aminobutyltrimethoxysilan, 4-Amino-3,3-dimethylbutyltrimethoxysilan, 3-Aminopropyldimethoxymethylsilan und N-(2-Aminoethyl)-3-aminopropyldimethoxymethylsilan, oder deren Analoga mit Ethoxygruppen anstelle der Methoxygruppen am Silicium. Davon besonders bevorzugt sind 3-Aminopropyltrimethoxysilan, 3-Aminopropyltriethoxysilan, N-(2-Aminoethyl)-3-aminopropyltrimethoxysilan oder N-(2-Aminoethyl)-3-aminopropyltriethoxysilan.

Bevorzugt weist die Zusammensetzung einen Gehalt an Amino- oder Mercaptosilan im Bereich von 1 bis 10 Gewichts-%, besonders bevorzugt im Bereich von 1.5 bis 8 Gewichts-%, insbesondere im Bereich von 2 bis 6 Gewichts-%, am meisten bevorzugt im Bereich von 3 bis 5 Gewichts-%, auf.

Eine solche Zusammensetzung weist eine besonders hohe Festigkeit bei guter Dehnbarkeit und zähelastische Eigenschaften auf. Besonders überraschend ist dabei der Umstand, dass mit den bevorzugten hohen Gehalten an Amino- oder Mercaptosilan - höher als im Stand der Technik üblich - Massen mit sehr hohen Festigkeiten erhalten werden, ohne dass dabei nennenswerte Einbussen bei der Dehnbarkeit im Vergleich zu Massen mit tieferen Gehalten an Amino- oder Mercaptosilan beobachtet werden.

Bevorzugt weisen das Silangruppen-haltige Polymer und das Amino- oder Mercaptosilan die gleichen Alkoxyreste an der Silangruppe auf. Dadurch wird bei der Aushärtung der Zusammensetzung nur eine Art von Alkohol freigesetzt. Bevorzugt stehen also R¹ und R⁴ für gleiche Reste, insbesondere für Methyl- oder für Ethyl-Reste.

In der Zusammensetzung beträgt das Gewichtsverhältnis zwischen dem Epoxid-Flüssigharz und dem Silangruppen-haltigen Polymer bevorzugt mindestens 1. Eine solche Zusammensetzung weist im ausgehärteten Zustand eine sehr hohe Zugfestigkeit, ein hohes Elastizitätsmodul und eine gute Dehnbarkeit auf und ist damit besonders geeignet als Klebstoff mit zähelastischen Eigenschaften.

Bevorzugt liegt das Gewichtsverhältnis zwischen dem Epoxid-Flüssigharz und dem Silangruppen-haltigen Polymer im Bereich von 1.2 bis 10, besonders bevorzugt 1.3 bis 9, insbesondere 1.4 bis 5.

Die Zusammensetzung weist bevorzugt einen relativen Gehalt an Amino- oder Mercaptosilan von mindestens 2 Gewichts-% bezogen auf die Summe aus dem Silangruppen-haltigen Polymer und dem Epoxid-Flüssigharz auf. Besonders bevorzugt weist sie einen relativen Gehalt an Amino- oder Mercaptosilan bezogen auf die Summe aus dem Silangruppen-haltigen Polymer und dem Epoxid-Flüssigharz im Bereich von 2 bis 10 Gewichts-%, bevorzugt 2.5 bis 8 Gewichts-%, insbesondere 3 bis 7 Gewichts-%, auf. Eine solche Zusammensetzung verfügt im ausgehärteten Zustand über sehr hohe Festigkeiten und ausgeprägt zähelastische Eigenschaften.

Ganz besonders bevorzugt ist eine Zusammensetzung, welche
(i) ein Gewichtsverhältnis zwischen dem Epoxid-Flüssigharz und dem Silangruppen-haltigen Polymer im Bereich von 1.2 bis 10, besonders bevorzugt 1.3 bis 9, insbesondere 1.4 bis 5, aufweist, und
(ii) einen relativen Gehalt an Amino- oder Mercaptosilan im Bereich von 2 bis 10 Gewichts-%, bevorzugt 2.5 bis 8, insbesondere 3 bis 7 Gewichts-%, bezogen auf die Summe aus dem Silangruppen-haltigen Polymer und dem Epoxid-Flüssigharz aufweist.

Weiterhin ganz besonders bevorzugt ist eine Zusammensetzung, welche
(i) einen Gehalt an bei Raumtemperatur flüssigem Silangruppen-haltigem Polymer im Bereich 5 bis 60 Gewichts-%, bevorzugt im Bereich von 10 bis 50 Gewichts-%, insbesondere im Bereich von 15 bis 40 Gewichts-%, aufweist,
(ii) einen Gehalt an Epoxid-Flüssigharz im Bereich von 30 bis 70 Gewichts-%, bevorzugt im Bereich von 35 bis 65 Gewichts-%, aufweist,
(iii) einen Gehalt an Polyetheramin mit einem mittleren Molekulargewicht im Bereich von 200 bis 500 g/mol im Bereich von 5 bis 30 Gewichts-%, bevorzugt im Bereich von 10 bis 30 Gewichts-%, aufweist, und
(iv) einen Gehalt an Amino- oder Mercaptosilan im Bereich von 1 bis 10 Gewichts-%, bevorzugt im Bereich von 1.5 bis 8 Gewichts-%, besonders bevorzugt im Bereich von 2 bis 6 Gewichts-%, insbesondere im Bereich von 3 bis 5 Gewichts-%, aufweist.

Mit solchen Zusammensetzungen sind zähelastische Materialien mit sehr hohen Festigkeiten erreichbar. Inbesondere sind Materialien erhältlich, welche ein E-Modul im Bereich von 0.05 bis 0.25% Dehnung von etwa 400 MPa bis gegen 1000 MPa aufweisen, bei einer Bruchdehnung im Bereich von etwa 8 bis 15 %.

Das Polyetheramin und das Amino- oder Mercaptosilan liegen in der Zusammensetzung nicht in der gleichen Komponente wie das Epoxid-Flüssigharz vor.

In einer Ausführungsform der Erfindung umfasst die Zusammensetzung eine erste Komponente enthaltend
- mindestens ein Silangruppen-haltiges Polymer und
- mindestens ein Epoxid-Flüssigharz,
und eine zweite Komponente enthaltend
- mindestens ein Polyetheramin und
- mindestens ein Amino- oder Mercaptosilan.

Eine solche Zusammensetzung weist den Vorteil auf, dass die erste Komponente besonders lagerstabil ist.

In einer weiteren Ausführungsform umfasst die Zusammensetzung eine erste Komponente enthaltend
- mindestens ein Silangruppen-haltiges Polymer,
- mindestens ein Polyetheramin und
- mindestens ein Amino- oder Mercaptosilan,
und eine zweite Komponente enthaltend
- mindestens ein Epoxid-Flüssigharz.

Eine solche Zusammensetzung weist den Vorteil auf, dass die Vermischbarkeit der beiden Komponenten besonders gut ist.

Bei beiden Ausführungsformen sind die Komponenten für sich allein unter Ausschluss von Feuchtigkeit lagerstabil. Beim Vermischen der beiden Komponenten reagieren primäre und/oder sekundäre Aminogruppen und/oder Mercaptogruppen mit vorhandenen Epoxidgruppen. Silangruppen reagieren unter Freisetzung von Alkohol, wenn sie mit Wasser in Kontakt kommen.

In einer bevorzugten Ausführungsform der Erfindung enthält die Zusammensetzung Wasser oder eine Wasser freisetzende Substanz. Eine solche Zusammensetzung ist besonders geeignet für Anwendungen, bei welchen die Aufnahme von Wasser aus der Luft oder aus den Substraten, auf welche die Zusammensetzung appliziert ist, gering ist. Dies sind insbesondere Anwendungen als Klebstoff zwischen diffusionsdichten Materialien wie Metallen, Kunststoffen, faserverstärkten Kompositwerkstoffen, Glas oder Keramik, bei welchen der Klebstoff kaum Luftkontakt hat.

Bevorzugt beträgt das Verhältnis zwischen dem in der Zusammensetzung enthaltenen bzw. in der Zusammensetzung freigesetzten Wasser zum für die vollständige Hydrolyse und Vernetzung der Silangruppen benötigten Wasser mindestens 0.5, bevorzugt mindestens 1, und höchstens 5, bevorzugt höchstens 2.5.

Bevorzugt kann die Zusammensetzung gesamthaft bis zu 1 Gewichts-% freies Wasser enthalten.

Das Wasser kann in freier Form vorliegen oder physikalisch oder chemisch an ein Trägermaterial gebunden sein. Als Trägermaterialien für Wasser geeignet sind poröse Materialien, welche Wasser in Hohlräume einschliessen, insbesondere Kieselgur oder Molekularsiebe. Weitere geeignete Trägermaterialien sind solche, die Wasser in nicht stöchiometrischen Mengen aufnehmen und eine pastöse Konsistenz haben oder Gels bilden, beispielsweise Kieselgele, Tone, Polysaccharide oder Polyacrylsäuren, die auch unter dem Begriff "Super-Absorber" bekannt sind und beispielsweise in der Herstellung von Hygieneartikeln zum Einsatz kommen. Weiterhin geeignete Trägermaterialien sind Polymere, in welchen Wasser so emulgiert werden kann, dass eine stabile Emulsion entsteht.

Als Wasser freisetzende Substanz geeignet sind Hydrate oder Aquakomplexe, insbesondere anorganische Verbindungen, die Wasser koordinativ gebunden oder als Kristallwasser enthalten, insbesondere Na₂SO₄·10H₂O, CaSO₄·2H₂O, CaSO₄·½H₂O, Na₂B₄O₇·10H₂O, MgSO₄·7H₂O, die Hexaquakomplexe von Eisen (II), Eisen (III), Kobalt (II), Kobalt (III) oder Nickel (II), [(H₂O)₄Co(NH₃)₂]³⁺ oder [Cl(H₂O)₃Co(NH₃)₂]²⁺.

Als Wasser freisetzende Substanz weiterhin geeignet sind Verbindungen, die Wasser beim Erhitzen, insbesondere bei einer Temperatur im Bereich von 50 bis 150 °C, insbesondere 70 bis 130 °C, freisetzen, wie beispielsweise Borsäure, Aluminiumhydroxide oder Kieselsäuren. Insbesondere geeignet ist Borsäure. Diese Verbindung liegt bevorzugt in feinteilig dispergierter Form vor. Sie weist insbesondere einen mittleren Teilchendurchmesser im Bereich von 0.01 bis 100 µm, bevorzugt 0.1 bis 50 µm, insbesondere 0.3 bis 30 µm, auf.

Als Wasser freisetzende Substanz weiterhin geeignet sind Verbindungen, welche mit primären Aminen kondensieren und dabei Wasser freisetzen können. Geeignete mit primären Aminen kondensationsfähige Verbindungen sind insbesondere:
- Ketone, insbesondere Aceton, Methylethylketon, Methylisobutylketon, Methylamylketon, Methylisoamylketon, Cyclohexanon;
- Diketone, insbesondere 1,3-Diketone, insbesondere 2,4-Pentandion oder 3,5-Heptandion, oder 1,4-Diketone, insbesondere 2,5-Hexandion;
- Aldehyde, insbesondere Propanal, 2-Methylpropanal, Butanal, 2-Methylbutanal, 2-Ethylbutanal, Pentanal, Pivalaldehyd, 2-Methylpentanal, 3-Methylpentanal, 4-Methylpentanal, 2,3-Dimethylpentanal, Hexanal, 2-Ethylhexanal, Heptanal, Octanal, Nonanal, Decanal, Undecanal, 2-Methylundecanal, Dodecanal, Methoxyacetaldehyd, Cyclopropancarbaldehyd, Cyclopentancarbaldehyd, Cyclohexancarbaldehyd, 2,2-Dimethyl-3-phenylpropanal, 1-Naphthaldehyd, Benzaldehyd, Salicylaldehyd, 2-Methylbenzaldehyd, 3-Methylbenzaldehyd, 4-Methylbenzaldehyd, 4-Methoxybenzaldehyd, 4-Dimethyl-aminobenzaldehyd, 2,2-Dimethyl-3-(N,N-bis(methoxyethyl))amino-propanal, 2,2-Dimethyl-3-(N-morpholino)propanal, 2,2-Dimethyl-3-(N-(2,6-dimethyl)-morpholino)propanal, 2,2-Dimethyl-3-acetoxypropanal, 2,2-Dimethyl-3-iso-butyroxypropanal oder 2,2-Dimethyl-3-lauroyloxypropanal.

In einer besonders bevorzugten Ausführungsform der Erfindung enthält die Zusammensetzung mindestens eine Wasser freisetzende Substanz, welche eine mit primären Aminen kondensationsfähige Verbindung ist. Diese Verbindung liegt bevorzugt nicht in der gleichen Komponente wie das Polyetheramin und das Amino- oder Mercaptosilan vor.

Beim Vermischen der Komponenten kann die mit primären Aminen kondensationsfähige Verbindung mit vorhandenen primären Aminen reagieren, wobei in der Zusammensetzung sehr schnell Wasser in feinster Verteilung entsteht und die vorhandenen Silangruppen somit besonders effizient vernetzen können. Eine solche Zusammensetzung weist bevorzugt soviele primäre Aminogruppen auf, dass nach dem Vermischen der Komponenten eine genügende Anzahl davon übrig bleiben, um zusammen mit den gegebenenfalls vorhandenen sekundären Aminogruppen und/oder Mercaptogruppen die in der Zusammensetzung enthaltenen Epoxidgruppen umzusetzen.

Bevorzugt enthält eine solche Zusammensetzung mindestens ein Silan der Formel (I), bei welchem X für NH steht.

Die Zusammensetzung kann zusätzlich zu den genannten noch weitere Bestandteile enthalten.

Die Zusammensetzung enthält bevorzugt einen Katalysator, der die Vernetzung von Silangruppen-haltigen Polymeren beschleunigt. Dafür geeignet sind insbesondere Metallkatalysatoren und/oder stickstoffhaltige Verbindungen. Geeignete Metallkatalysatoren sind Verbindungen von Titan, Zirkonium, Aluminium oder Zinn, insbesondere Organozinn-Verbindungen, Organotitanate, Organozirkonate oder Organoaluminate, wobei diese Metallkatalysatoren insbesondere Alkoxygruppen, Aminoalkoxygruppen, Sulfonatgruppen, Carboxylgruppen, 1,3-Diketonatgruppen, 1,3-Ketoesteratgruppen, Dialkylphosphatgruppen oder Dialkylpyrophosphatgruppen aufweisen.

Besonders geeignete Organozinn-Verbindungen sind Dialkylzinnoxide, Dialkylzinndichloride, Dialkylzinndicarboxylate oder Dialkylzinndiketonate, insbesondere Dibutylzinnoxid, Dibutylzinndichlorid, Dibutylzinndiacetat, Dibutylzinndilaurat, Dibutylzinndiacetylacetonat, Dioctylzinnoxid, Dioctylzinndichlorid, Dioctylzinndiacetat, Dioctylzinndilaurat oder Dioctylzinndiacetylacetonat, sowie Alkylzinnthioester.

Besonders geeignete Organotitanate sind Bis(ethylacetoacetato)-diisobutoxy-titan(IV), Bis(ethylacetoacetato)diisopropoxy-titan(IV), Bis(acetylacetonato)-diisopropoxy-titan(IV), Bis(acetylacetonato)-diisobutoxy-titan(IV), Tris(oxyethyl)amin-isopropoxy-titan(IV), Bis[tris(oxyethyl)amin]-diisopropoxy-titan(IV), Bis(2-ethylhexan-1,3-dioxy)-titan(IV), Tris[2-((2-aminoethyl)amino)ethoxy]-ethoxy-titan(IV), Bis(neopentyl(diallyl)oxy-diethoxy-titan(IV), Titan(IV)-tetra-butanolat, Tetra-(2-ethylhexyloxy)titanat, Tetra-(isopropoxy)titanat oder Polybutyltitanat. Insbesondere geeignet sind die kommerziell erhältlichen Typen Tyzor^{®} AA, GBA, GBO, AA-75, AA-65, AA-105, DC, BEAT, BTP, TE, TnBT, KTM, TOT, TPT oder IBAY (alle von Dorf Ketal); Tytan PBT, TET, X85, TAA, ET, S2, S4 oder S6 (alle von Borica Company Ltd.) oder Ken-React^{®} KR^{®} TTS, 7, 9QS, 12, 26S, 33DS, 38S, 39DS, 44, 134S, 138S, 133DS, 158FS oder LICA^{®} 44 (alle von Kenrich Petrochemicals).

Besonders geeignete Organozirkonate sind die kommerziell erhältlichen Typen Ken-React^{®} NZ^{®} 38J, KZ^{®} TPPJ, KZ^{®} TPP, NZ^{®} 01, 09, 12 38, 44 oder 97 (alle von Kenrich Petrochemicals) oder Snapcure^{®} 3020, 3030, 1020 (alle von Johnson Matthey & Brandenberger).

Ein besonders geeignetes Organoaluminat ist der kommerziell erhältliche Typ K-Kat 5218 (von King Industries).

Als Katalysator geeignete stickstoffhaltige Verbindungen sind insbesondere Amine wie insbesondere N-Ethyl-diisopropylamin, N,N,N',N'-Tetramethyl-al-kylendiamine, Polyoxyalkylenamine, 1,4-Diazabicyclo[2.2.2]octan; Aminosilane wie insbesondere 3-Aminopropyl-trimethoxysilan, 3-Aminopropyl-dimethoxy-methylsilan, N-(2-Aminoethyl)-3-aminopropyl-trimethoxysilan, N-(2-Amino-ethyl)-3-aminopropyl-methyldimethoxysilan, N-(2-Aminoethyl)-N'-[3-(trimetho-xysilyl)propyl]ethylendiamin sowie deren Analoga mit Ethoxy- oder Isopropoxyanstelle der Methoxygruppen am Silicium; Amidine wie insbesondere 1,8-Di-azabicyclo[5.4.0]undec-7-en (DBU), 1,5-Diazabicyclo[4.3.0]non-5-en (DBN), 6-Dibutylamino-1,8-diazabicyclo[5.4.0]undec-7-en; Guanidine wie insbesondere Tetramethylguanidin, 2-Guanidinobenzimidazol, Acetylacetoneguanidin, 1,3-Dio-tolylguanidin, 2-tert-Butyl-1,1,3,3-tetramethylguanidin oder Umsetzungsprodukte aus Carbodiimiden und Aminen wie insbesondere Polyetheraminen oder Aminosilanen; oder Imidazole wie insbesondere N-(3-Trimethoxysilylpropyl)-4,5-dihydroimidazol oder N-(3-Triethoxysilylpropyl)-4,5-dihydroimidazol. Insbesondere geeignet sind auch Kombinationen verschiedener Katalysatoren, insbesondere Kombinationen aus mindestens einem Metallkatalysator und mindestens einer stickstofifhaltigen Verbindung.

Als Katalysator bevorzugt sind Organozinn-Verbindungen, Organotitanate, Amine, Amidine, Guanidine oder Imidazole.

Weiterhin kann die Zusammensetzung weitere gegenüber Epoxidgruppen reaktive Substanzen enthalten, insbesondere die Folgenden:
- Monoamine wie Hexylamin oder Benzylamin oder Polyethermonoamine, insbesondere Alkohol-gestartete Typen wie Jeffamine^{®} M-600, Jeffamine^{®} M-1000, Jeffamine^{®} M-2005, Jeffamine^{®} M-2070, Jeffamine^{®} XTJ-581, Jeffamine^{®} XTJ-249 oder Jeffamine^{®} XTJ-435, oder Alkylphenol-gestartete Typen wie Jeffamine^{®} XTJ-436 (alle von Huntsman);
- aliphatische, cycloaliphatische oder arylaliphatische primäre Diamine, insbesondere 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, Bis(4-aminocyclohexyl)methan (H₁₂-MDA), Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (Isophorondiamin oder IPDA), 2-oder 4-Methyl-1,3-diaminocyclohexan oder Mischungen davon, 1,3-Bis(aminomethyl)cyclohexan, 1,4-Bis(aminomethyl)cyclohexan, 2,5(2,6)-Bis(aminomethyl)bicyclo[2.2.1]heptan (NBDA), 3(4),8(9)-Bis(aminomethyl)tricyclo-[5.2.1.0^{2,6}]decan, 1,4-Diamino-2,2,6-trimethylcyclohexan (TMCDA), 1,8-Men-thandiamin, 3,9-Bis(3-aminopropyl)-2,4,8,10-tetraoxaspiro[5.5]undecan, 1,3-Bis(aminomethyl)benzol (MXDA) oder 1,4-Bis(aminomethyl)benzol;
- aliphatische, cycloaliphatische oder arylaliphatische primäre Triamine, insbesondere 1,3,5-Tris(aminomethyl)benzol, 1,3,5-Tris(aminomethyl)cyclohexan, Tris(2-aminoethyl)amin, Tris(2-aminopropyl)amin oder Tris(3-aminopropyl)amin;
- Ethergruppen-haltige aliphatische primäre Di- oder Triamine, insbesondere Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin oder 4,7,10-Trioxatridecan-1,13-diamin;
- sekundäre Aminogruppen aufweisende Polyamine mit zwei primären aliphatischen Aminogruppen, insbesondere 3-(2-Aminoethyl)aminopropylamin, Bis-(hexamethylen)triamin (BHMT), Diethylentriamin (DETA), Triethylentetramin (TETA), Tetraethylenpentamin (TEPA), Pentaethylenhexamin (PEHA) oder höhere Homologe linearer Polyethylenamine wie Polyethylenpolyamin mit 5 bis 7 Ethylenamin-Einheiten (sogenanntes "higher ethylenepolyamine", HEPA), Produkte aus der mehrfachen Cyanoethylierung oder Cyanobutylierung und anschliessender Hydrierung von primären Di- und Polyaminen mit mindestens zwei primären Aminogruppen, wie Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin oder N,N'-Bis(3-amino-1-ethylpropyl)-2-methyl-1,5-pentandiamin;
- Polyamine mit ein oder zwei sekundären Aminogruppen, insbesondere N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethyl-piperidin, N-(2-Aminoethyl)piperazin, N-Methyl-1,3-propandiamin, N-Butyl-1,3-propandiamin, N-(2-Ethylhexyl)-1,3-propandiamin, N-Cyclohexyl-1,3-propandiamin, 3-Methyl-amino-1-pentylamin, 3-Ethylamino-1-pentylamin, 3-Cyclohexylamino-1-pentylamin, Fettdiamine wie N-Cocoalkyl-1,3-propandiamin, Produkte aus der Michael-artigen Additionsreaktion von primären aliphatischen Diaminen mit Acrylnitril, Malein- oder Fumarsäurediestern, Citraconsäurediestern, Acryl- oder Methacrylsäureestern, Acryl- oder Methacrylsäureamiden oder Itaconsäurediestern, umgesetzt im Molverhältnis 1:1, Produkte aus der reduktiven Alkylierung von primären aliphatischen Polyaminen mit Aldehyden oder Ketonen, insbesondere N-Benzyl-1,3-bis(aminomethyl)benzol, N,N'-Dibenzyl-1,3-bis(aminomethyl)benzol, N-2-Ethylhexyl-1,3-bis(aminomethyl)benzol, N,N'-Bis(2-ethylhexyl)-1,3-bis(aminomethyl)benzol, N¹-Benzyl-1,2-propandiamin, N¹-(4-Methoxybenzyl)-1,2-propandiamin, N¹-(4-(Dimethylamino)benzyl)-1,2-propandiamin, oder partiell styrolisierte Polyamine wie zum Beispiel styrolisiertes MXDA (erhältlich als Gaskamine^{®} 240 von Mitsubishi Gas Chemical);
- tertiäre Aminogruppen aufweisende Polyamine mit primären aliphatischen Aminogruppen, wie insbesondere 3-(N,N-Dimethylamino)propylamin (DMAPA), 3-(N,N-Diethylamino)propylamin (DEAPA), 2-(N,N-Diethylamino)-ethylamin, 1-(N,N-Diethylamino)-4-aminopentan, N,N-Dimethyldi(1,3-propylen)triamin (DMAPAPA), N,N'-Bis(aminopropyl)piperazin, N,N-Bis(3-aminopropyl)methylamin, N,N-Bis(3-aminopropyl)ethylamin, N,N-Bis(3-aminopropyl)propylamin, N,N-Bis(3-aminopropyl)cyclohexylamin, N,N-Bis(3-aminopropyl)-2-ethylhexylamin, Produkte aus der doppelten Cyanoethylierung und nachfolgender Reduktion von Fettaminen, welche abgeleitet sind von natürlichen Fettsäuren, wie N,N-Bis(3-aminopropyl)dodecylamin oder N,N-Bis(3-aminopropyl)talgalkylamin, erhältlich als Triameen^{®} Y12D oder Triameen^{®} YT (von Akzo Nobel); Tris(2-aminoethyl)amin, Tris(2-aminopropyl)amin, Tris(3-aminopropyl)amin oder 4-Aminomethyl-1,8-octandiamin;
- aromatische Polyamine, wie insbesondere m- und p-Phenylendiamin, 4,4'-, 2,4' und/oder 2,2'-Diaminodiphenylmethan, 3,3'-Dichloro-4,4'-diaminodiphenylmethan (MOCA), 2,4- und/oder 2,6-Toluylendiamin, Mischungen von 3,5-Dimethylthio-2,4- und -2,6-toluylendiamin (erhältlich als Ethacure^{®} 300 von Albermarle), Mischungen von 3,5-Diethyl-2,4- und -2,6-toluylendiamin (DETDA), 3,3',5,5'-Tetraethyl-4,4'-diaminodiphenylmethan (M-DEA), 3,3',5,5'-Tetraethyl-2,2'-dichloro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 4,4'-Diaminodiphenylsulfon (DDS), 4-Amino-N-(4-aminophenyl)benzolsulfonamid, 5,5'-Methylendianthranilsäure, Dimethyl-(5,5'-methylendianthranilat), 1,3-Propylen-bis(4-aminobenzoat), 1,4-Butylen-bis(4-aminobenzoat), Polytetramethy-lenoxid-bis(4-aminobenzoat) (erhältlich als Versalink^{®} von Air Products), 1,2-Bis(2-aminophenylthio)ethan, 2-Methylpropyl-(4-chloro-3,5-diaminobenzoat) oder tert.Butyl-(4-chloro-3,5-diaminobenzoat);
- Addukte der genannten Polyamine mit Epoxiden oder Epoxidharzen, insbesondere Addukte mit Diepoxiden im Molverhältnis von ungefähr 2/1, Addukte mit Monoepoxiden im Molverhältnis von ungefähr 1/1, oder Umsetzungsprodukte aus Aminen und Epichlorhydrin, insbesondere jenes von 1,3-Bis(aminomethyl)benzol, kommerziell erhältlich als Gaskamine^{®} 328 (von Mitsubishi Gas Chemical);
- Polyamidoamine, insbesondere Umsetzungsprodukte aus einer ein- oder mehrwertigen Carbonsäure, beziehungsweise deren Ester oder Anhydride, insbesondere einer Dimerfettsäure, mit einem im stöchiometrischen Überschuss eingesetzten aliphatischen, cycloaliphatischen oder aromatischen Polyamin, insbesondere einem Polyalkylenamin wie beispielsweise DETA oder TETA, insbesondere die kommerziell erhältlichen Polyamidoamine Versamid^{®} 100, 125, 140 oder 150 (von Cognis), Aradur^{®} 223, 250 oder 848 (von Huntsman), Euretek^{®} 3607 oder 530 (von Huntsman) oder Beckopox^{®} EH 651, EH 654, EH 655, EH 661 oder EH 663 (von Cytec);
- Mannich-Basen erhalten aus der Umsetzung von Phenolen mit Aldehyden, insbesondere Formaldehyd, und aliphatischen oder cycloaliphatischen Aminen, insbesondere Phenalkamine, d.h. Mannich-Basen von Cardanol (langkettigen Alk(en)ylphenolen und -resorcinen gewonnen durch thermische Behandlung von Cashewschalenöl-Extrakten, enthaltend als Hauptkomponente 3-(Pentadeca-8,11,14-trienyl)phenol), insbesondere die kommerziellen Typen Cardolite^{®} NC-541, NC-557, NC-558, NC-566, Lite 2001 oder Lite 2002 (von Cardolite), Aradur^{®} 3440, 3441, 3442 oder 3460 (von Huntsman) oder Beckopox^{®} EH 614, EH 621, EH 624, EH 628 oder EH 629 (von Cytec);
- flüssige Mercaptan-terminierte Polysulfid-Polymere, bekannt unter dem Markennamen Thiokol^{®} (von Morton Thiokol; beispielsweise erhältlich von SPI Supplies, oder von Toray Fine Chemicals), insbesondere die Typen LP-3, LP-33, LP-980, LP-23, LP-55, LP-56, LP-12, LP-31, LP-32 oder LP-2; sowie weiterhin bekannt unter dem Markennamen Thioplast^{®} (von Akzo Nobel), insbesondere die Typen G 10, G 112, G 131, G 1, G 12, G 21, G 22, G 44 oder G 4;
- Polyether mit endständigen Mercaptogruppen, insbesondere Produkte aus der Umsetzung von Polyetherpolyolen mit Epichlorhydrin und anschliessendem Austausch der Chloridgruppen durch Mercaptogruppen, beispielsweise mittels Natriumhydrogensulfid, insbesondere die kommerziellen Typen Capcure^{®} 3-800 oder GPM 800 (von Gabriel Performance Products);
- Polyester von Thiocarbonsäuren oder Veresterungsprodukte von Polyoxyalkylendiolen oder -triolen, ethoxyliertem Trimethylolpropan oder PolyesterDiolen, mit Thiocarbonsäuren wie Thioglykolsäure oder 2- oder 3-Mercapto-propionsäure; oder
- weitere Mercaptogruppen aufweisende Verbindungen, wie insbesondere 2,4,6-Trimercapto-1,3,5-triazin, 2,2'-(Ethylendioxy)-diethanthiol (Triethylenglykol-dimercaptan) oder Ethandithiol.

Bevorzugt enthält die Zusammensetzung neben dem Polyetheramin und dem Amino- oder Mercaptosilan nur einen geringen Anteil an weiteren gegenüber Epoxidgruppen reaktiven Substanzen. Bevorzugt stammen höchstens 50 %, besonders bevorzugt höchstens 25 %, insbesondere höchstens 10 %, aller gegenüber Epoxidgruppen reaktiven Gruppen in der Zusammensetzung nicht vom Polyetheramin oder vom Amino- oder Mercaptosilan.

Weitere geeignete Bestandteile der Zusammensetzung sind insbesondere die folgenden Hilfs- und Zusatzmittel:
- Haftvermittler und/oder Vernetzer, insbesondere Aminosilane mit sekundären Aminogruppen wie insbesondere N-Phenyl-, N-Cyclohexyl- oder N-Alkyl-aminosilane, Epoxysilane wie insbesondere 3-Glycidoxypropyltrimethoxysilan, (Meth)acrylosilane, Anhydridosilane, Carbamatosilane, Alkylsilane oder Iminosilane, oder oligomere Formen dieser Silane, oder Addukte aus primären Aminosilanen mit Epoxysilanen oder (Meth)acrylosilanen oder Anhydridosilanen.
- Weichmacher, insbesondere Carbonsäureester wie Phthalate, insbesondere Dioctylphthalat, Diisononylphthalat oder Diisodecylphthalat, Adipate, insbesondere Dioctyladipat, Azelate, Sebacate, Polyole, insbesondere Polyoxyalkylenpolyole oder Polyesterpolyole, Glykolether, Glykolester, organische Phosphor- und Sulfonsäureester, Polybutene oder von natürlichen Fetten oder Ölen abgeleitete Fettsäuremethyl- oder -ethylester, auch "Biodiesel" genannt.
- Lösemittel oder Verdünner, insbesondere Xylol, Methoxypropylacetat, Dibutylether, Diether von Ethylenglykol oder Diethylenglykol oder Propylenglykol oder Dipropylenglykol, Octan, Diphenylmethan, Diisopropylnaphthalin, Erdölfraktionen wie zum Beispiel Solvesso^{®}-Typen (von Exxon), N-Methylpyrrolidon oder höhere N-Alkylpyrrolidone, oder ethoxyliertes oder propoxyliertes Phenol.
- Reaktivverdünner für Epoxidharze, insbesondere Kresylglycidylether, Benzylglycidylether, tert.Butylphenylglycidylether, Nonylphenylglycidylether, 2-Ethylhexylglycidylether, Glycidylether von natürlichen Alkoholen wie insbesondere C₈- bis C₁₀-Alkylglycidyletheroder C₁₂- bis C₁₄-Alkylglycidylether, oder Glycidylether von Di- oder Polyolen wie Polypropylenglykolen, Dimethylolcyclohexan, Glycerin, Neopentylglykol oder Trimethylolpropan.
- weitere Epoxidharze, insbesondere Bisphenol-A-, -F- oder -A/F-Festharze, Bisphenol-F-Novolake, Glycidylether von Polypropylenglykolen oder hydriertes Bisphenol-A-, -F- oder -A/F-Flüssigharz.
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere, Sulfonamidmodifizierte Melamine oder gereinigte Montan-Wachse;
- anorganische und organische Füllstoffe, insbesondere gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Glimmer wie insbesondere Kaliumglimmer (Mica), Dolomite, Wollastonite, Kaoline, calcinierte Kaoline, Molekularsiebe, Aluminiumoxide, Aluminiumhydroxide, Magnesiumhydroxid, Kieselsäuren inklusive hochdisperse Kieselsäuren aus Pyrolyseprozessen, Zemente, Gipse, Flugaschen, Russ, Graphit, Metall-Pulver wie Aluminium, Kupfer, Eisen, Silber oder Stahl, PVC-Pulver oder Hohlkugeln.
- Fasern, insbesondere Glasfasern, Kohlefasern, Metallfasern, Keramikfasern oder Kunststofffasern wie Polyamidfasern oder Polyethylenfasern.
- Farbstoffe.
- Pigmente, insbesondere Titandioxid oder Eisenoxide.
- Beschleuniger für die Reaktion von Epoxidgruppen wie insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, oder organische Sulfonsäuren wie Methansulfonsäure, p-Toluolsulfonsäure oder 4-Dodecylbenzolsulfonsäure, oder Sulfonsäureester oder andere organische oder anorganische Säuren wie insbesondere Phosphorsäure, oder Mischungen der vorgenannten Säuren und Säureester; oder tertiäre Amine wie insbesondere 1,4-Diazabicyclo[2.2.2]octan, Benzyldimethylamin, α-Methylbenzyldimethylamin, Triethanolamin, Dimethylaminopropylamin, Imidazole wie insbesondere N-Methylimidazol, N-Vinylimidazol oder 1,2-Dimethylimidazol, Salze solcher tertiärer Amine, quaternäre Ammoniumsalze wie insbesondere Benzyltrimethylammoniumchlorid, Amidine wie insbesondere 1,8-Diazabicyclo[5.4.0]undec-7-en, Guanidine wie insbesondere 1,1,3,3-Tetramethylguanidin, Phenole wie insbesondere tert.Butylphenol, Nonylphenol, Dodecylphenol, Cardanol (langkettige Alk(en)ylphenole und -resorcine gewonnen durch thermische Behandlung von Cashewschalenöl-Extrakten, enthaltend als Hauptkomponente 3-(Pentadeca-8,11,14-trienyl)phenol, kommerziell erhältlich insbesondere als Cardolite^{®} NC-700 von Cardolite), styrolisiertes Phenol, Bisphenole, Phenolgruppen-haltige aromatische Kohlenwasserstoffharze, insbesondere die Novares^{®}-Typen LS 500, LX 200, LA 300 oder LA 700 (von Rütgers), Phenol-Harze wie Novolake, oder Mannich-Basen wie insbesondere 2-(Dimethylaminomethyl)phenol, 2,4,6-Tris-(dimethylaminomethyl)phenol oder Polymere aus Phenol, Formaldehyd und N,N-Dimethyl-1,3-propandiamin, Phosphite wie insbesondere Di- oder Triphenylphosphite, oder Mercaptogruppen aufweisende Verbindungen.
- Trocknungsmittel, insbesondere Tetraethoxysilan, Vinyltrimethoxy- oder Vinyltriethoxysilan oder Organoalkoxysilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, sowie Calciumoxid oder Molekularsiebe.
- Rheologie-Modifizierer, insbesondere Verdickungsmittel, insbesondere Schichtsilikate wie Bentonite, Derivate von Rizinusöl, hydriertes Rizinusöl, Polyamide, Polyurethane, Harnstoffverbindungen, Polyvinylchloride, pyrogene Kieselsäuren, Celluloseether oder hydrophob modifizierte Polyoxyethylene.
- Stabilisatoren gegen Oxidation, Wärme, Licht oder UV-Strahlung.
- natürliche Harze, Fette oder Öle wie Kolophonium, Schellack, Leinöl, Rizinusöl oder Sojaöl.
- flammhemmende Substanzen, insbesondere Aluminiumhydroxid (ATH), Magnesiumdihydroxid (MDH), Antimontrioxid, Antimonpentoxid, Borsäure (B(OH)₃), Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), Resorcinoldiphosphat-Oligomer, Tetraphenylresorcinoldiphosphit, Ethylendiamindiphosphat oder Bisphenol-A-bis(diphenylphosphat), Tris(chloroethyl)phosphat, Tris(chloropropyl)phosphat oder Tris(dichloroisopropyl)phosphat, Tris[3-bromo-2,2-bis-(bromomethyl)propyl]phosphat, Tetrabromo-Bisphenol-A, Bis(2,3-dibromopropylether) von Bisphenol A, bromierte Epoxidharze, Ethylen-bis(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan oder Chlorparaffine;
- oberflächenaktive Substanzen, insbesondere Netzmittel, Verlaufsmittel, Entlüftungsmittel oder Entschäumer.
- Biozide, insbesondere Algizide, Fungizide oder das Pilzwachstum hemmende Substanzen.

Es kann sinnvoll sein, gewisse Bestandteile vor dem Einmischen in die Zusammensetzung chemisch oder physikalisch zu trocknen, insbesondere wenn sie als Bestandteil der ersten Komponente verwendet werden sollen.

Solche weitere Bestandteile der Zusammensetzung können als Bestandteil der ersten oder der zweiten Komponente vorhanden sein. Freies Wasser liegt bevorzugt nicht in der gleichen Komponente wie das Silangruppen-haltige Polymer und das Amino- oder Mercaptosilan vor. Gegenüber Epoxidgruppen reaktive weitere Bestandteile sind bevorzugt nicht in der gleichen Komponente wie das Epoxid-Flüssigharz.

In der Zusammensetzung liegt das Verhältnis zwischen der Anzahl von gegenüber Epoxidgruppen reaktiven Gruppen gegenüber der Anzahl Epoxidgruppen bevorzugt im Bereich von 0.5 bis 1.5, insbesondere in Bereich von 0.8 bis 1.2.

In einer bevorzugten Ausführungsform ist die beschriebene Zusammensetzung frei von 2,4,6-Tris(dimethylaminomethyl)phenol. Diese Verbindung verursacht einen unangenehmen Geruch, eine Gelbfärbung der Zusammensetzung und teilweise eine Substratverschmutzung.

Die beiden Komponenten der beschriebenen Zusammensetzung werden separat unter Ausschluss von Feuchtigkeit hergestellt und aufbewahrt. Sie werden typischerweise jeweils in einem eigenen Gebinde gelagert. Die separaten Komponenten sind lagerstabil; das heisst, jede Komponente kann vor ihrer Anwendung während mehreren Monaten bis zu einem Jahr und länger aufbewahrt werden, ohne dass sie sich in ihren jeweiligen Eigenschaften in einem für ihren Gebrauch relevanten Ausmass verändert. Ein geeignetes Gebinde zum Lagern der jeweiligen Komponente ist insbesondere ein Fass, ein Hobbock, ein Beutel, ein Eimer, eine Dose, eine Kartusche oder eine Tube.

Zur Anwendung der beschriebenen Zusammensetzung werden die beiden Komponenten kurz vor oder während der Applikation miteinander vermischt.

Das Mischungsverhältnis wird dabei bevorzugt so gewählt, dass die gegenüber Epoxidgruppen reaktiven Gruppen in einem geeigneten Verhältnis zu den Epoxidgruppen stehen, wie vorgängig beschrieben. In Gewichtsteilen liegt das Mischungsverhältnis zwischen den beiden Komponenten üblicherweise im Bereich von 1:10 bis 10:1.

Die Vermischung der beiden Komponenten erfolgt mittels eines geeigneten Verfahrens; sie kann kontinuierlich oder batchweise erfolgen, über einen Statikmischer oder mit Hilfe eines dynamischen Mischers. Falls das Vermischen vor der Applikation erfolgt, muss darauf geachtet werden, dass die Applikation innerhalb der Topfzeit der Zusammensetzung erfolgt, da es sonst zu Störungen, wie beispielsweise einem verlangsamten oder unvollständigen Aufbau der Haftung zum Substrat oder vorzeitigem Gelieren, kommen kann. Als "Topfzeit" wird dabei die Zeit bezeichnet, innerhalb welcher die Zusammensetzung nach dem Vermischen der Komponenten appliziert sein soll.

Die Vermischung erfolgt bevorzugt bei Umgebungstemperatur, welche typischerweise im Bereich von etwa 5 bis 50 °C, bevorzugt bei etwa 10 bis 30 °C, liegt.

Mit dem Vermischen der beiden Komponenten beginnt die Aushärtung durch chemische Reaktion. Dabei reagieren primäre und sekundäre Aminogruppen und Mercaptogruppen mit vorhandenen Epoxidgruppen unter deren Ringöffnung. Beim Kontakt mit Wasser hydrolysieren vorhandene Silangruppen unter Freisetzung von Alkohol, wobei Silanolgruppen (Si-OH-Gruppen) und durch nachfolgende Kondensationsreaktionen Siloxangruppen (Si-O-Si-Gruppen) gebildet werden. Als Ergebnis dieser Reaktionen härtet die Zusammensetzung zu einem vernetzten Kunststoff aus. Falls das Wasser für die Hydrolysereaktion der Silangruppen nicht bereits in der Zusammensetzung vorhanden war oder in dieser freigesetzt wurde, kann es aus der Luft (Luftfeuchtigkeit) oder einem Substrat stammen, oder die Zusammensetzung kann mit einer Wasser enthaltenden Komponente in Kontakt gebracht werden, zum Beispiel durch Bestreichen, Besprühen oder Einmischen.

Die Aushärtung erfolgt insbesondere bei einer Temperatur im Bereich von 0 bis 150 °C. Sie kann insbesondere bei Umgebungstemperatur erfolgen, wobei sie sich typischerweise über einige Tage bis Wochen erstreckt, bis sie unter den gegebenen Bedingungen weitgehend abgeschlossen ist. Die Aushärtung kann aber auch bei erhöhter Temperatur erfolgen, insbesondere bei einer Temperatur im Bereich von 50 bis 130 °C. In diesem Fall enthält die Zusammensetzung bevorzugt Wasser oder insbesondere eine Wasser freisetzende Substanz. In gewissen Fällen kann es vorteilhaft sein, eine bei Umgebungstemperatur teilgehärtete Zusammensetzung bei einer erhöhten Temperatur nachzuhärten bzw. vollständig auszuhärten.

Insbesondere verläuft die Aushärtung der Zusammensetzung in der Art, dass einerseits eine ausreichende Topf- bzw. Offenzeit gewährleistet ist, um die Zusammensetzung richtig zu applizieren, und dass andererseits die Aushärtung schnell soweit fortgeschritten ist, dass die Zusammensetzung weiter bearbeitet werden kann oder insbesondere eine mit der Zusammensetzung ausgeführte Verklebung selbsttragend ist und transportiert werden kann.

Ein weiterer Gegenstand der Erfindung ist somit auch eine ausgehärtete Zusammensetzung, erhalten aus der im vorliegenden Dokument beschrieben Zusammensetzung durch Vermischen der ersten Komponente mit der zweiten Komponente.

Es hat sich gezeigt, dass bei der Aushärtung die Zeit bis zur Klebefreiheit der Zusammensetzung von der Vernetzungsgeschwindigkeit des Silangruppen-haltigen Polymers bestimmt wird. Dies ist ein Hinweis darauf, dass in der ausgehärteten Zusammensetzung typischerweise das ausgehärtete Silangruppen-haltige Polymer die kontinuierliche und das ausgehärtete Epoxidharz die disperse Phase bildet, was durch Raman-Mikroskopie-Untersuchungen gestützt wird. Das Amino- oder Mercaptosilan kann die beiden Phasen chemisch verbinden.

Aus den Beispielen ist ersichtlich, dass eine Zusammensetzung ohne Zusatz von Füllstoffen nach dem Aushärten von intransparent-weiss über halbtransparent bis zu transparent aussehen kann, wobei halbtransparente und transparente Zusammensetzungen besonders hohe Festigkeiten aufweisen. Besonders hohe Festigkeiten werden erhalten, wenn das Epoxid-Flüssigharz und das Amino- oder Mercaptosilan in den bevorzugten Mengen vorhanden sind.

Die ausgehärtete Zusammensetzung weist hervorragende mechanische Eigenschaften, eine sehr gute thermische Beständigkeit und gute Haftungseigenschaften auf. Sie ist damit besonders geeignet als Klebstoff, Dichtstoff, Beschichtung oder Vergussmasse mit zähelastischen Eigenschaften. Ganz besonders geeignet ist sie als Klebstoff, da die beobachteten zähelastischen Eigenschaften zusammen mit der guten thermischen Beständigkeit und den guten Haftungseigenschaften vor allem für steif-elastische Verklebungen besonders vorteilhaft sind.

Die Zusammensetzung ist insbesondere auch dann vorteilhaft, wenn aus Gründen des Arbeits- und Gesundheitsschutzes isocyanatfreie Produkte eingesetzt werden sollen.

Die Zusammensetzung eignet sich besonders zum Verkleben, Abdichten oder Beschichten von folgenden Substraten:
- Glas, Glaskeramik, Siebdruckkeramik, Beton, Mörtel, Backstein, Ziegel, Gips, Natursteine wie Granit oder Marmor, oder Glasmineralfasermatten;
- Metalle oder Legierungen wie Aluminium, Eisen, Stahl oder Buntmetalle, oder oberflächenveredelte Metalle oder Legierungen wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe, insbesondere Hart- oder Weich-PVC, ABS, Polycarbonat (PC), Polyamid (PA), Polyester, PMMA, Epoxidharze, PUR, POM, PO, PE, PP, EPM oder EPDM, wobei die Kunststoffe gegebenenfalls mittels Plasma, Corona oder Flammen oberflächenbehandelt sind;
- Faserverstärkte Kunststoffe, wie Kohlefaser-verstärkte Kunststoffe (CFK), Glasfaser-verstärkte Kunststoffe (GFK) oder Sheet Moulding Compounds (SMC);
- beschichtete Substrate, wie pulverbeschichtete Metalle oder Legierungen;
- Farben oder Lacke, insbesondere Automobildecklacke.

Die Substrate können bei Bedarf vor dem Applizieren der Zusammensetzung vorbehandelt werden. Derartige Vorbehandlungen umfassen insbesondere physikalische und/oder chemische Reinigungsverfahren, beispielsweise Schleifen, Sandstrahlen, Kugelstrahlen, Bürsten und/oder Abblasen, sowie weiterhin Behandeln mit Reinigern oder Lösemitteln oder das Aufbringen eines Haftvermittlers, einer Haftvermittlerlösung oder eines Primers.

Ein weiterer Gegenstand der vorliegenden Erfindung ist die Verwendung der beschriebenen Zusammensetzung als Klebstoff, insbesondere für das strukturelle Kleben in der Bau- oder Fertigungsindustrie, insbesondere als Montageklebstoff, Karrosserieklebstoff, Sandwichelementklebstoff, Halbschalenklebstoff für Rotorblätter von Windkraftanlagen oder Fassadenelementklebstoff.

Ein solcher Klebstoff wird vor seiner Anwendung bevorzugt in einer Packung aufbewahrt, welche aus einer Verpackung mit zwei voneinander getrennten Kammern besteht, welche jeweils die erste beziehungsweise die zweite Komponente des Klebstoffs enthält.

Bevorzugte derartige Packungen sind side-by-side Doppelkartuschen oder Koaxialkartuschen, bei denen zwei röhrenförmige Kammern nebeneinander oder ineinander angeordnet sind und mit Kolben luft- und feuchtigkeitsdicht verschlossen sind. Über den Vortrieb dieser Kolben können die Komponenten aus der Kartusche ausgepresst werden. Die den Kolben entgegengesetzten Seiten der Rohre sind, gegebenenfalls über einen Adapter, derart modifiziert, dass die Kammeröffnungen im Bereich der Öffnung über eine Trennwand miteinander direkt verbunden sind. Vorteilhaft ist im Bereich der Austrittsöffnung der Kammern ein Gewinde angebracht, so dass ein Statikmischer oder ein dynamischer Mischer dicht angebracht werden kann. Derartige Packungen werden insbesondere für Kleinanwendungen bevorzugt, insbesondere für Füllmengen bis 1 Liter. Für Anwendungen in grösseren Mengen, insbesondere für Anwendungen in der industriellen Fertigung, werden die beiden Komponenten vorteilhaft in Fässern oder Hobbocks gelagert. Bei der Anwendung des Klebstoffs werden die Komponenten über Förderpumpen ausgepresst und über Leitungen einer Mischapparatur, wie sie üblicherweise für Zweikomponentenklebstoffe in der industriellen Fertigung verwendet wird, zudosiert. Das Vermischen erfolgt dabei typischerweise über Statikmischer oder mit Hilfe von dynamischen Mischern. Um die Mischqualität visuell zu kontrollieren, kann es vorteilhaft sein, wenn die beiden Komponenten zwei unterschiedliche Farben aufweisen. Eine gute Vermischung liegt dann vor, wenn der vermischte Klebstoff homogen gefärbt ist, ohne sichtbare Streifen oder Schlieren aufzuweisen.

Der Klebstoff wird insbesondere verwendet in einem Verfahren zum Verkleben von einem ersten Substrat mit einem zweiten Substrat, welches die Schritte umfasst:
- Vermischen der vorgängig beschriebenen ersten und zweiten Komponente,
- Applizieren des vermischten Klebstoffs auf mindestens eine der zu verklebenden Substratoberflächen,
- Fügen der zu verklebenden Substrate innerhalb der Offenzeit,
- Aushärten des Klebstoffs.

Dabei können die beiden Substrate aus dem gleichen oder unterschiedlichen Materialien bestehen. Geeignete Substrate sind insbesondere die bereits genannten.

Aus der Verwendung des Klebstoffs entsteht ein Artikel, bei welchem der Klebstoff zwei Substrate miteinander verbindet. Der Artikel enthält also eine zumindest teilweise gehärtete Zusammensetzung gemäss vorhergehender Beschreibung.

Dieser Artikel ist insbesondere ein Haus, ein Badezimmer, eine Küche, ein Dach, eine Brücke, ein Tunnel, eine Strasse, ein Sandwichelement einer Leichtbaustruktur, ein Solarpanel wie Photovoltaik- oder Solarthermie-Module, eine Glasfassade, ein Fenster, eine Scheibe, ein Spiegel, eine Wanne, eine Weissware, ein Haushaltsapparat, ein Geschirrspüler, eine Waschmaschine, ein Backofen, ein Rotorblatt einer Windkraftanlage, ein Automobil, ein Bus, ein Lastkraftwagen, ein Schienenfahrzeug, ein Schiff, ein Flugzeug, ein Helikopter, oder ein Scheinwerfer; oder ein Anbauteil eines solchen Artikels.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" wird 23±1°C und 50±5% relative Luftfeuchtigkeit bezeichnet.

"AHEW" steht für das Aminwasserstoff-Equivalentgewicht.

"EEW" steht für das Epoxid-Equivalentgewicht.

### Verwendete Silangruppen-haltige Polymere:

### STP Polymer-1:

Unter Feuchtigkeitsausschluss wurden 1000 g Polyol Acclain^{®} 12200 (von Bayer; low monol Polyoxypropylendiol, OH-Zahl 11.0 mg KOH/g, Wassergehalt ca. 0.02 Gew.-%), 43.6 g Isophorondiisocyanat (Vestanat^{®} IPDI von Evonik Industries), 126.4 g Diisodecylphthalat und 0.12 g Dibutylzinndilaurat unter stetigem Rühren auf 90°C aufgeheizt und auf dieser Temperatur belassen, bis der titrimetrisch bestimmte Gehalt an freien Isocyanatgruppen einen Wert von 0.63 Gew.-% erreicht hatte. Anschliessend wurden 62.3 g N-(3-Trimethoxysilylpropyl)amino-bernsteinsäurediethylester eingemischt und die Mischung bei 90°C solange gerührt, bis mittels FT-IR-Spektroskopie kein freies Isocyanat mehr nachgewiesen wurde. Das silanfunktionelle Polymer wurde auf Raumtemperatur abgekühlt und unter Ausschluss von Feuchtigkeit aufbewahrt.

Das STP Polymer-1 enthält 10 Gewichts-% Weichmacher (Diisodecylphthalat).

### STP Polymer-2:

Unter Feuchtigkeitsausschluss wurden 600 g Polyol Acclain^{®} 12200 (von Bayer; low monol Polyoxypropylendiol, OH-Zahl 11.0 mg KOH/g, Wassergehalt ca. 0.02 Gew.-%), 24.9 g Isocyanatopropyltrimethoxysilan und 0.6 g Dibutylzinndilaurat unter stetigem Rühren auf 80°C aufgeheizt und 2 h auf dieser Temperatur belassen, bis mittels FT-IR-Spektroskopie kein Reaktionsfortschritt mehr festgestellt wurde. Die restlichen Isocyanatgruppen wurden durch Zugabe von 2.0 g Methanol bei 70 °C während 30 min umgesetzt und die Mischung dann während weiteren 30 min bei 80°C und ca. 2 mbar nachbehandelt. Das silanfunktionelle Polymer wurde auf Raumtemperatur abgekühlt und unter Ausschluss von Feuchtigkeit aufbewahrt.

### STP Polymer-3:

Geniosil^{®} STP E15 (Trimethoxysilylpropylcarbamat-terminierter Polyether von Wacker Chemie)

**Verwendete kommerzielle Substanzen und Abkürzungen dafür:**

| | |
|---|---|
| EP-Harz | Bisphenol-A-Diglycidylether (Araldite^{®} GY 250 von Huntsman, EEW ca. 187.5 g/Eq) |
| DBTDL10% | Dibutylzinn(IV)dilaurat, 10 Gewichts-% in Diisodecylphthalat |
| Silan A-1110 | 3-Aminopropyltrimethoxysilan (Silquest^{®} A-1110 von Momentive, AHEW ca. 89.7 g) |
| Silan A-1120 | N-(2-Aminoethyl)-3-aminopropyltrimethoxysilan (Silquest^{®} A-1120 von Momentive, AHEW ca. 74.1 g) |
| Silan A-189 | 3-Mercaptopropyltrimethoxysilan (Silquest^{®} A-189 von Momentive, Molekulargewicht ca. 196 g) |
| Epoxysilan | 3-Glycidoxypropyltrimethoxysilan (Silquest^{®} A-187 von Momentive, Molekulargewicht ca. 236 g) |
| Vinylsilan | Vinyltrimethoxysilan (Silquest^{®} A-171 von Momentive) |
| Jeff. D-230 | Polyetherdiamin, mittleres Molekulargewicht ca. 230 g/mol, AHEW ca. 60 g (Jeffamine^{®} D-230 von Huntsman) |
| Jeff. D-400 | Polyetherdiamin, mittleres Molekulargewicht ca. 430 g/mol, AHEW ca. 115 g (Jeffamine^{®} D-400 von Huntsman) |
| Jeff. T-403 | Polyethertriamin, mittleres Molekulargewicht ca. 440 g/mol, AHEW ca. 81 g (Jeffamine^{®} T-403 von Huntsman) |
| Jeff. D-2000 | Polyetherdiamin, mittleres Molekulargewicht ca. 2000 g/mol, AHEW ca. 514 g (Jeffamine^{®} D-2000 von Huntsman) |
| TMD | 2,2,4- und 2,4,4-Trimethylhexamethylendiamin, AHEW 39.6 g/Eq (Vestamin^{®} TMD von Evonik Industries) |
| DETA | Diethylentriamin, AHEW 20.6 g |
| Ancam. K 54 | 2,4,6-Tris(dimethylaminomethyl)phenol (Ancamine^{®} K 54 von Air Products) |
| DBU | 1,8-Diazabicyclo[5.4.0]undec-7-en |
| Aminaddukt | Umsetzungsprodukt aus 116 Gewichtsteilen 1,5-Diamino-2-methylpentan und 200 Gewichtsteilen Araldite^{®} DY-K (Monoglycidylether von Kresol mit EEW ca. 182 g/Eq, von Huntsman), AHEW 109 g |
| Aldehyd-1 | 2,2-Dimethyl-3-(N-morpholino)propanal |
| Aldehyd-2 | 2-Ethylhexanal |
| Aldehyd-3 | 2,2-Dimethyl-3-lauroyloxypropanal |

### Herstellung von zweikomponentigen Zusammensetzungen:

### Beispiele 1 bis 36:

Für jedes Beispiel wurden die in den Tabellen 1 bis 7 angegebenen Inhaltsstoffe in den angegebenen Mengen (in Gewichtsteilen) der Komponente-1 mittels eines Zentrifugalmischers (SpeedMixer™ DAC 150, FlackTek Inc.) vermischt und unter Ausschluss von Feuchtigkeit aufbewahrt.

Ebenso wurden die in den Tabellen 1 bis 7 angegebenen Inhaltsstoffe der Komponente-2 verarbeitet und aufbewahrt.

Anschliessend wurden die beiden Komponenten jeder Zusammensetzung mittels des Zentrifugalmischers zu einer homogenen Flüssigkeit verarbeitet und diese unverzüglich folgendermassen geprüft:

Zur Messung der Zeit bis zur Klebefreiheit, abgekürzt als **"TFT",** wurde ein kleiner Teil der vermischten raumtemperaturwarmen Zusammensetzung in einer Schichtdicke von ca. 3 mm auf Pappkarton aufgetragen und im Normklima die Zeit bestimmt, die es dauerte, bis beim leichten Antippen der Oberfläche der Zusammensetzung mittels einer Pipette aus LDPE erstmals keine Rückstände auf der Pipette mehr zurückblieben.

Die **Zugfestigkeit,** die **Bruchdehnung,** und der Elastizitätsmodul bei 0.05 bis 0.25 % Dehnung **(E-Modul 1)** und bei 0.5 bis 5.0 % Dehnung **(E-Modul 2)** wurden nach DIN EN 53504 (Zuggeschwindigkeit 10 mm/min) bestimmt an Hanteln mit einer Länge von 75 mm, bei einer Steglänge von 30 mm und einer Stegbreite von 4 mm, welche durch Ausstanzen aus Filmen von ca. 2 mm Dicke der bei den jeweils angegebenen Bedingungen ausgehärteten Zusammensetzung hergestellt wurden. Die in den Tabellen mit "10d NK" bezeichneten Werte wurden bestimmt nach einer Lagerzeit von 10 Tagen im Normklima. Die mit "+2d 80°C" bezeichneten Werte wurden bestimmt an Hanteln, welche 10 Tage im Normklima und anschliessend während 2 Tagen in einem Umluftofen bei 80 °C gelagert waren. Die mit "+7d 100°C" bezeichneten Werte wurden bestimmt an Hanteln, welche 10 Tage im Normklima und anschliessend während 7 Tagen in einem Umluftofen bei 100 °C gelagert waren. Die mit"+7d 60°C/100%rF" bezeichneten Werte wurden bestimmt an Hanteln, welche 10 Tage im Normklima und anschliessend während 7 Tagen bei 60 °C und 100 % relativer Luftfeuchtigkeit gelagert waren.

Zur Messung der **Zugscherfestigkeit** wurden Prüfkörper hergestellt, indem die Zusammensetzung jeweils 1 Minute nach Abschluss der Mischzeit zwischen zwei mit Isopropanol entfetteten H420 Stahlblechen (Dicke des Stahlblechs 1.5 mm) in einer Schichtdicke von 0.3 mm auf einer überlappenden Klebefläche von 10 x 25 mm aufgebracht wurde. An diesen Prüfkörpern wurde die Zugscherfestigkeit nach DIN EN 1465 bei Raumtemperatur bestimmt, wobei die Prüfkörper vor der Messung 7 Tage im Normklima und anschliessend 3 h in einem Umluftofen bei 80°C gelagert und dann auf Raumtemperatur abgekühlt waren.

Alle Filme waren nach der Aushärtung absolut klebfrei, opak weiss bis voll transparent, und mit einer glänzenden bis seidenmatten Oberfläche. Der Grad der Transparenz wurde optisch beurteilt und mit "intransparent" oder "halb-transparent" (gegebenenfalls abgekürzt mit "halbtransp.") oder "transparent" bezeichnet und als **"Aspekt"** angegeben. Filme, welche als "inhomogen" bezeichnet sind, zeigten Zonen bzw. Schlieren mit unterschiedlicher Transparenz.

Die Resultate sind in den Tabellen 1 bis 7 angegeben.

Die mit "(Ref)" bezeichneten Beispiele sind Vergleichsbeispiele.

"EP/STP" bezeichnet in den Tabellen jeweils das Gewichtsverhältnis zwischen dem Epoxid-Flüssigharz und dem Silangruppen-haltigen Polymer (ohne Weichmacher).

"rel. Silangehalt" bezeichnet in den Tabellen jeweils den relativen Gehalt an Amino- oder Mercaptosilan bezogen auf die Summe aus dem Silangruppen-haltigen Polymer und dem Epoxid-Flüssigharz (ohne Weichmacher) in Gewichts-%.

**Tabelle 1: Zusammensetzung und Eigenschaften der Beispiele 1 bis 5 und der Vergleichsbeispiele 6 bis 8. "Zugf." steht für "Zugfestigkeit"**

| **Beispiel** | **1** | **2** | **3** | **4** | **5** | **6 (Ref)** | **7 (Ref)** | **8 (Ref)** |
|---|---|---|---|---|---|---|---|---|
| **Komponente-1 :** | | | | | | | | |
| STP Polymer-1 | 32.8 | 32.8 | 32.8 | 32.8 | 32.8 | 32.8 | 32.8 | 32.8 |
| EP-Harz | 66.5 | 66.5 | 66.5 | 66.5 | 66.5 | 66.5 | 66.5 | 66.5 |
| DBTDL10% | 0.7 | 0.7 | 0.7 | 0.7 | 0.7 | 0.7 | 0.7 | 0.7 |
| **Komponente-2:** | | | | | | | | |
| Silan A-1120 | 5.0 | 5.0 | 5.0 | 5.0 | 5.0 | 5.0 | 5.0 | 7.5 |
| Jeff. D230 | 20.0 | 20.0 | - | - | - | - | - | - |
| Jeff. D400 | - | - | 37.0 | - | - | - | - | - |
| Jeff. T403 | - | - | | 25.0 | - | - | - | - |
| Jeff. D2000 | - | - | - | - | 14.0 | - | - | - |
| TMD | - | - | - | - | 11.0 | 13.0 | - | - |
| Aminaddukt | - | - | - | - | - | - | 35.0 | - |
| Ancam. K 54 | - | 2 | - | - | - | - | - | 10.0 |
| TFT (min.) | 150 | 150 | 110 | 170 | 148 | 122 | 146 | 136 |
| Aspekt | halbtransp., farblos | halbtransp., gelblich | transparent, farblos | halbtransp., farblos | intransparent, weiss | intransparent, weiss | intransparent, weiss | intransparent, gelb |
| **10d NK** | | | | | | | | |
| Zugf. [MPa] | 14.0 | 13.8 | 16.0 | 19.6 | 10.3 | 8.1 | 4.9 | 8.3 |
| Bruchdehnung | 13% | 9% | 45% | 9% | 17% | 14% | 15% | 41% |
| E-Modul 1 [MPa] | 570 | 555 | 675 | 757 | 223 | 140 | 60 | 81 |
| E-Modul 2 [MPa] | 228 | 203 | 262 | 340 | 102 | 70 | 45 | 43 |
| **+2d 80°** | | | | | | | | |
| Zugf. [MPa] | 16.9 | 16.3 | 17.5 | 21.0 | 9.0 | 7.0 | 6.0 | 9.8 |
| Bruchdehnung | 10% | 8% | 16% | 7.9% | 9% | 8% | 14% | 7% |
| E-Modul 1 [MPa] | 663 | 610 | 882 | 974 | 249 | 166 | 115 | 234 |
| E-Modul 2 [MPa] | 284 | 278 | 283 | 343 | 120 | 89 | 74 | 139 |
| EP/STP | 2.3 | 2.3 | 2.3 | 2.3 | 2.3 | 2.3 | 2.3 | 2.3 |
| rel. Silangehalt [%] | 5.2 | 5.2 | 5.2 | 5.2 | 5.2 | 5.2 | 5.2 | 7.8 |

**Tabelle 2: Zusammensetzung und Eigenschaften des Vergleichsbeispiels 9 und der Beispiele 10 bis 15. "Zugf." steht für "Zugfestigkeit"**

| **Beispiel** | **9 (Ref)** | **10** | **11** | **12** | **13** | **14** | **15** |
|---|---|---|---|---|---|---|---|
| **Komponente-1 :** | | | | | | | |
| STP Polymer-1 | 32.8 | 32.8 | 32.8 | 32.8 | 32.8 | 32.8 | 32.8 |
| EP-Harz | 66.5 | 66.5 | 66.5 | 66.5 | 66.5 | 66.5 | 66.5 |
| DBTDL10% | 0.7 | 0.7 | 0.7 | 0.7 | 0.7 | 0.7 | 0.7 |
| **Komponente-2:** | | | | | | | |
| Silan A-1110 | - | 1.0 | 2.5 | 5.0 | 7.5 | 10.0 | - |
| Silan A-189 | - | - | - | - | - | - | 5.0 |
| Jeff. D-230 | 24.0 | 23.0 | 22.5 | 20.0 | 18.5 | 17.0 | 21.8 |
| DBU | - | - | - | - | - | - | 0.2 |
| TFT (min.) | 94 | 125 | 135 | 132 | 82 | 62 | 125 |
| Aspekt | intransparent | intransparent | halbtransp. | halbtransp. | halbtransp. | transparent | halbtransp. |
| **10d NK** | | | | | | | |
| Zugf. [MPa] | 3.1 | 6.2 | 9.6 | 12.7 | 14.6 | 10.5 | 10.4 |
| Bruchdehnung | 12% | 22% | 15% | 12% | 13% | 8% | 14% |
| E-Modul 1 [MPa] | 39 | 73 | 177 | 527 | 633 | 520 | 411 |
| E-Modul 2 [MPa] | 23 | 52 | 77 | 193 | 254 | 256 | 157 |
| **+2d 80°** | | | | | | | |
| Zugf. [MPa] | 4.7 | 6.8 | 9.8 | 15.0 | 15.7 | 14.4 | 12.5 |
| Bruchdehnung | 11% | 16% | 12% | 8% | 8% | 6% | 10% |
| E-Modul 1 [MPa] | 47 | 83 | 210 | 615 | 702 | 572 | 493 |
| E-Modul 2 [MPa] | 30 | 67 | 101 | 230 | 279 | 281 | 188 |
| EP/STP | 2.3 | 2.3 | 2.3 | 2.3 | 2.3 | 2.3 | 2.3 |
| rel. Silangehalt [%] | 0 | 1.0 | 2.6 | 5.2 | 7.8 | 10.4 | 5.2 |

**Tabelle 3: Zusammensetzung und Eigenschaften der Beispiele 1, 16 bis 19, und der Vergleichsbeispiele 20 bis 22. "Zugf." steht für "Zugfestigkeit"**

| **Beispiel** | **16** | **17** | **1** | **18** | **19** | **20 (Ref)** | **21 (Ref)** | **22 (Ref)** |
|---|---|---|---|---|---|---|---|---|
| **Komponente-1 :** | | | | | | | | |
| STP Polymer-1 | 32.8 | 32.8 | 32.8 | 32.8 | 32.8 | 32.8 | 32.8 | 32.8 |
| EP-Harz | 66.5 | 66.5 | 66.5 | 66.5 | 66.5 | 66.5 | 66.5 | 66.5 |
| DBTDL10% | 0.7 | 0.7 | 0.7 | 0.7 | 0.7 | 0.7 | 0.7 | 0.7 |
| Epoxysilan | - | - | - | - | - | - | 5.0 | 7.5 |
| **Komponente-2:** | | | | | | | | |
| Silan A-1120 | 1.7 | 3.3 | 5.0 | 7.5 | 10.0 | - | - | - |
| Vinylsilan | - | - | - | -- | - | 4.0 | - | - |
| Jeff. D230 | 22.4 | 21.2 | 20.0 | 18.5 | 17.0 | 20.0 | 24.0 | 24.0 |
| DETA | - | - | - | - | - | 1.0 | - | - |
| TFT (min.) | 240 | 170 | 150 | 146 | 142 | 140 | 165 | 160 |
| Aspekt | halbtransp. | halbtransp. | halbtransp. | halbtransp. | halbtransp. | intransparent | intransparent | inhomogen |
| **10d NK** | | | | | | | | |
| Zugf. [MPa] | 6.1 | 12.1 | 14.0 | 12.6 | 10.6 | 1.0 | 3.2 | 1.4 |
| Bruchdehnung | 13% | 14% | 13% | 13% | 11% | 15% | 23% | 10% |
| E-Modul 1 [MPa] | 102 | 452 | 570 | 438 | 310 | 20 | 27 | 50 |
| E-Modul 2 [MPa] | 47 | 182 | 228 | 233 | 215 | 8 | 20 | 20 |
| **+2d 80°** | | | | | | | | |
| Zugf. [MPa] | 6.6 | 13.9 | 16.9 | 16.4 | 13.8 | 1.2 | 3.3 | 2.2 |
| Bruchdehnung | 11% | 11% | 10% | 10% | 9% | 8% | 19% | 8% |
| E-Modul 1 [MPa] | 127 | 516 | 663 | 525 | 403 | 68 | 36 | 90 |
| E-Modul 2 [MPa] | 65 | 169 | 284 | 280 | 258 | 17 | 26 | 36 |
| EP/STP | 2.3 | 2.3 | 2.3 | 2.3 | 2.3 | 2.3 | 2.3 | 2.3 |
| rel. Silangehalt [%] | 1.8 | 3.4 | 5.2 | 7.8 | 10.4 | - | - | - |

**Tabelle 4: Zusammensetzung und Eigenschaften der Beispiele 1 und 23 bis 27. "Zugf." steht für "Zugfestigkeit"**

| **Beispiel** | **23** | **24** | **25** | **1** | **26** | **27** |
|---|---|---|---|---|---|---|
| **Komponente-1 :** | | | | | | |
| STP Polymer-1 | 59.6 | 49.7 | 39.7 | 33.1 | 19.9 | 9.9 |
| EP-Harz | 39.7 | 49.7 | 59.6 | 66.2 | 79.4 | 89.4 |
| DBTDL10% | 0.7 | 0.7 | 0.7 | 0.7 | 0.7 | 0.7 |
| **Komponente-2:** | | | | | | |
| Silan A-1120 | 5.0 | 5.0 | 5.0 | 5.0 | 5.0 | 5.0 |
| Jeff. D230 | 10.0 | 14.0 | 17.0 | 20.0 | 25.0 | 28.0 |
| TFT (min.) | 121 | 144 | 176 | 150 | 191 | 280 |
| Aspekt | halbtransparent | halbtransparent | halbtransparent | halbtransparent | inhomogen | inhomogen |
| **10d NK** | | | | | | |
| Zugf. [MPa] | 5.5 | 7.8 | 10.9 | 14.0 | 26.7 | 36.1 |
| Bruchdehnung | 66% | 46% | 19% | 13% | 7% | 9% |
| E-Modul 1 [MPa] | 62 | 151 | 382 | 570 | 1439 | 1903 |
| E-Modul 2 [MPa] | 38 | 79 | 148 | 228 | 392 | 515 |
| **+2d 80°** | | | | | | |
| Zugf. [MPa] | 4.8 | 8.3 | 13.1 | 16.9 | 34.5 | 45.3 |
| Bruchdehnung | 36% | 25% | 13% | 10% | 8% | 7% |
| E-Modul 1 [MPa] | 73 | 180 | 432 | 663 | 1392 | 1847 |
| E-Modul 2 [MPa] | 37 | 85 | 162 | 284 | 611 | 802 |
| EP/STP | 0.74 | 1.1 | 1.7 | 2.2 | 4.4 | 10.0 |
| rel. Silangehalt [%] | 5.3 | 5.3 | 5.2 | 5.2 | 5.1 | 5.0 |

**Tabelle 5: Zusammensetzung und Eigenschaften der Beispiele 1 und 28 bis 32. "Zugf." steht für "Zugfestigkeit"**

| **Beispiel** | **28** | **29** | **30** | **31** | **32** | **1** |
|---|---|---|---|---|---|---|
| **Komponente-1 :** | | | | | | |
| STP Polymer-1 | 32.8 | 32.8 | 32.8 | 32.8 | 32.8 | 32.8 |
| EP-Harz | 66.5 | 66.5 | 66.5 | 66.5 | - | 66.5 |
| Silan A-1120 | - | - | - | - | 5.0 | - |
| Jeff. D-230 | - | - | - | - | 20.0 | - |
| DBTDL10% | 0.7 | 0.7 | 0.7 | 0.7 | 0.7 | 0.7 |
| Aldehyd-1 | 2.0 | - | - | - | - | - |
| Aldehyd-2 | - | 2.0 | - | - | - | - |
| Aldehyd-3 | - | - | 3.3 | - | - | - |
| 2,4-Pentandion | - | - | - | 2.0 | - | - |
| **Komponente-2:** | | | | | | |
| Silan A-1120 | 5.0 | 5.0 | 5.0 | 5.0 | - | 5.0 |
| Jeff. D-230 | 20.0 | 20.0 | 20.0 | 20.0 | - | 20.0 |
| EP-Harz | - | - | - | - | 66.5 | - |
| Wasser | - | - | - | - | 0.25 | - |
| TFT (min.) | 140 | 130 | 145 | 135 | 140 | 150 |
| Aspekt | transparent | transparent | transparent | transparent | halbtransparent | halbtransparent |
| **10d NK** | | | | | | |
| Zugf. [MPa] | 15.8 | 15.1 | 14.4 | 12.1 | 13.2 | 14.0 |
| Bruchdehnung | 8% | 10% | 12% | 10% | 10% | 13% |
| E-Modul 1 [MPa] | 767 | 761 | 820 | 555 | 472 | 570 |
| E-Modul 2 [MPa] | 247 | 241 | 229 | 146 | 206 | 228 |
| **+2d 80°** | | | | | | |
| Zugf. [MPa] | 23 | 23 | 21 | 15 | 19 | 16.9 |
| Bruchdehnung | 6% | 9% | 9% | 7% | 8% | 10% |
| E-Modul 1 [MPa] | 768 | 760 | 825 | 448 | 677 | 663 |
| E-Modul 2 [MPa] | 298 | 285 | 271 | 175 | 247 | 284 |
| EP/STP | 2.3 | 2.3 | 2.3 | 2.3 | 2.3 | 2.3 |
| rel. Silangehalt [%] | 5.2 | 5.2 | 5.2 | 5.2 | 5.2 | 5.2 |

**Tabelle 6: Zusammensetzung und Eigenschaften der Beispiele 1 und 33 bis 34. "n.b." steht für "nicht bestimmt"**

| **Beispiel** | **1** | **33** | **34** |
|---|---|---|---|
| **Komponente-1 :** | | | |
| STP Polymer-1 | 32.8 | - | - |
| STP Polymer-2 | - | 32.8 | - |
| STP Polymer-3 | - | - | 32.8 |
| EP-Harz | 66.5 | 66.5 | 66.5 |
| DBTDL 10% | 0.7 | 0.7 | 0.7 |
| **Komponente-2:** | | | |
| Silan A-1120 | 5.0 | 5.0 | 5.0 |
| Jeff. D-230 | 20.0 | 20.0 | 20.0 |
| TFT (min.) | 150 | 80 | 90 |
| Aspekt | halbtransparent | intransparent | intransparent |
| **10d NK** | | | |
| Zugfestigkeit [MPa] | 14.0 | 7.2 | 7.0 |
| Bruchdehnung | 13% | 14% | 12% |
| E-Modul 1 [MPa] | 570 | 95 | 153 |
| E-Modul 2 [MPa] | 228 | 56 | 70 |
| **+2d 80°** | | | |
| Zugfestigkeit [MPa] | 16.9 | 6.7 | 8.6 |
| Bruchdehnung | 10% | 9% | 11% |
| E-Modul 1 [MPa] | 663 | 138 | 169 |
| E-Modul 2 [MPa] | 284 | 75 | 88 |
| **+7d 100°C** | | | |
| Zugfestigkeit [MPa] | 11.0 | n.b. | n.b. |
| Bruchdehnung | 9% | n.b. | n.b. |
| E-Modul 1 [MPa] | 622 | n.b. | n.b. |
| E-Modul 2 [MPa] | 184 | n.b. | n.b. |
| **+7d 60°C/100%rF** | | | |
| Zugfestigkeit [MPa] | 10.5 | n.b. | n.b. |
| Bruchdehnung | 9% | n.b. | n.b. |
| E-Modul 1 [MPa] | 507 | n.b. | n.b. |
| E-Modul 2 [MPa] | 178 | n.b. | n.b. |
| EP/STP | 2.3 | 2.0 | 2.0 |
| rel. Silangehalt [%] | 5.2 | 5.0 | 5.0 |

**Tabelle 7: Zusammensetzung und Eigenschaften der Beispiele 35 bis 36. ¹ Socal^{®} U 1 S2 von Solvay**

| **Beispiel** | **35** | **36** |
|---|---|---|
| **Komponente-1 :** | | |
| STP Polymer-1 | 32.8 | 32.8 |
| EP-Harz | 66.5 | 66.5 |
| DBTDL10% | 0.7 | 0.7 |
| Wollastonit | 25.0 | - |
| gefällte beschichtete Kreide¹ | - | 25.0 |
| **Komponente-2:** | | |
| Silan A-1120 | 5.0 | 5.0 |
| Jeff. D-230 | 20.0 | 20.0 |
| Zugscherfestigkeit [MPa] | 17.3 | 14.1 |
| **10d NK** | | |
| Zugfestigkeit [MPa] | 20.2 | 14.9 |
| Bruchdehnung | 5% | 3% |
| E-Modul 1 [MPa] | 1093 | 1072 |
| **+3h 80°** | | |
| Zugfestigkeit [MPa] | 20.0 | 17.1 |
| Bruchdehnung | 4% | 4% |
| E-Modul 1 [MPa] | 1200 | 1075 |

## Patentansprüche

1. Zusammensetzung umfassend eine erste und eine zweiten Komponente, enthaltend
- mindestens ein bei Raumtemperatur flüssiges Silangruppen-haltiges Polymer,
- mindestens ein Epoxid-Flüssigharz,
- mindestens ein Polyetheramin und
- mindestens Amino- oder Mercaptosilan,
wobei das Polyetheramin und das Amino- oder Mercaptosilan nicht in der gleichen Komponente wie das Epoxid-Flüssigharz vorliegen.

2. Zusammensetzung gemäss Anspruch 1, **dadurch gekennzeichnet, dass** das Silangruppen-haltige Polymer ein Silangruppen-haltiger Polyether ist.

3. Zusammensetzung gemäss einem der vorhergehenden Ansprüche, **dadurch gekennzeichnet, dass** sie einen Gehalt an Silangruppen-haltigem Polymer im Bereich von 5 bis 60 Gewichts-% aufweist.

4. Zusammensetzung gemäss einem der vorhergehenden Ansprüche, **dadurch gekennzeichnet, dass** sie einen Gehalt an Epoxid-Flüssigharz im Bereich von 30 bis 70 Gewichts-% aufweist.

5. Zusammensetzung gemäss einem der vorhergehenden Ansprüche, **dadurch gekennzeichnet, dass** das Polyetheramin ein mittleres Molekulargewicht im Bereich von 200 bis 500 g/mol aufweist.

6. Zusammensetzung gemäss einem der vorhergehenden Ansprüche, **dadurch gekennzeichnet, dass** sie einen Gehalt an Polyetheramin im Bereich von 5 bis 30 Gewichts-% aufweist.

7. Zusammensetzung gemäss einem der vorhergehenden Ansprüche, **dadurch gekennzeichnet, dass** das Amino- oder Mercaptosilan ein Silan der Formel (I) ist, 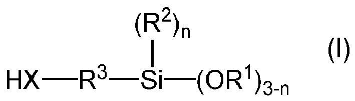 wobei
X für S oder NH steht,
R¹ für einen einwertigen linearen oder verzweigten Kohlenwasserstoff-Rest mit 1 bis 5 C-Atomen steht,
R² für einen einwertigen linearen oder verzweigten Kohlenwasserstoff-Rest mit 1 bis 8 C-Atomen steht,
R³ für einen zweiwertigen linearen oder verzweigten Kohlenwasserstoff-Rest mit 1 bis 12 C-Atomen, welcher gegebenenfalls cyclische und/oder aromatische Anteile und gegebenenfalls ein oder mehrere Heteroatome, aufweist, steht und
n für 0 oder 1 oder 2 steht.

8. Zusammensetzung gemäss einem der vorhergehenden Ansprüche, **dadurch gekennzeichnet, dass** sie einen Gehalt an Amino- oder Mercaptosilan im Bereich von 1 bis 10 Gewichts-% aufweist.

9. Zusammensetzung gemäss einem der vorhergehenden Ansprüche, **dadurch gekennzeichnet, dass** das Gewichtsverhältnis zwischen dem Epoxid-Flüssigharz und dem Silangruppen-haltigen Polymer im Bereich von 1.2 bis 10 liegt.

10. Zusammensetzung gemäss einem der vorhergehenden Ansprüche, **dadurch gekennzeichnet, dass** der relative Gehalt an Amino- oder Mercaptosilan bezogen auf die Summe aus dem Silangruppen-haltigen Polymer und dem Epoxid-Flüssigharz im Bereich von 2 bis 10 Gewichts-% liegt.

11. Zusammensetzung gemäss einem der vorhergehenden Ansprüche, **dadurch gekennzeichnet, dass** sie Wasser oder eine Wasser freisetzende Substanz enthält.

12. Zusammensetzung gemäss Anspruch 11, **dadurch gekennzeichnet, dass** sie mindestens eine Wasser freisetzende Substanz enthält, welche eine mit primären Aminen kondensationsfähige Verbindung ist.

13. Ausgehärtete Zusammensetzung erhalten aus einer Zusammensetzung gemäss einem der Ansprüche 1 bis 12 durch Vermischen der ersten Komponente mit der zweiten Komponente.

14. Verwendung einer Zusammensetzung gemäss einem der Ansprüche 1 bis 12 als Klebstoff.

15. Verklebter Artikel erhalten aus einer Verwendung gemäss Anspruch 14.
